# EUROPEAN PATENT APPLICATION

(11) **EP 4 848 080 A1**
(43) Date of publication of application: **02.12.2026**
(21) Application number: 25747590.5
(22) Date of filing: 20.01.2025
(51) Int. Cl.: G06F 9/30

(54) **INSTRUCTION PROCESSING METHOD AND APPARATUS, AND DEVICE AND COMPUTER-READABLE STORAGE MEDIUM**

(30) Priority: 30.01.2024 CN 202410133420
(71) Applicant: Huawei Technologies Co., Ltd., Shenzhen, Guangdong 518129 (CN)
(72) Inventor: LI, Yi, Shenzhen, Guangdong 518129 (CN); ZHANG, Xu, Shenzhen, Guangdong 518129 (CN); ZHANG, Kang, Shenzhen, Guangdong 518129 (CN)
(74) Representative: Huawei European IPR
(86) International application number: PCT/CN2025/073216
(87) International publication number: WO 2025/162018

(57) **Abstract**

This application discloses an instruction processing method, apparatus, and device, and a computer-readable storage medium, and belongs to the field of computer technologies. The method includes: obtaining a to-be-processed first instruction; determining, based on a memory structure and a required speed for reading the first instruction, a compression hierarchy of a memory in the memory structure, where the memory structure is configured to store a compressed first instruction; and compressing the first instruction by using the compression hierarchy. A size of storage space occupied by the first instruction is reduced by compressing the first instruction. A memory structure with a same capacity can store more compressed first instructions than uncompressed first instructions. This increases a quantity of instructions stored in the memory structure, and reduces storage overheads of the memory structure. Because the first instruction is compressed based on the compression hierarchy of the memory, a process of restoring the compressed first instruction meets the required speed, and the process of restoring the compressed first instruction does not affect normal running of the memory.

## Description

This application claims priority to Chinese Patent Application No. 202410133420.0, filed on January 30, 2024 and entitled "INSTRUCTION PROCESSING METHOD, APPARATUS, AND DEVICE, AND COMPUTER-READABLE STORAGE MEDIUM", which is incorporated herein by reference in its entirety.

### TECHNICAL FIELD

This application relates to the field of computer technologies, and in particular, to an instruction processing method, apparatus, and device, and a computer-readable storage medium.

### BACKGROUND

In the field of computer technologies, a processor includes an instruction storage module (instruction memory, IMEM), a decoding module (decoder, DEC), and a parallel computing module (arithmetic and logic unit, ALU). The instruction storage module is configured to store instructions obtained by compiling an application program. The decoding module is configured to parse a plurality of instructions in parallel. The parallel computing module is configured to perform parallel computing based on information obtained by parsing the plurality of instructions, to obtain a plurality of pieces of result data. In this way, the application program is run based on the plurality of pieces of result data. As complexity of the application program increases, more instructions are obtained by compiling the application program, and more instructions are stored in the instruction storage module.

### SUMMARY

This application provides an instruction processing method, apparatus, and device, and a computer-readable storage medium, to store more instructions. Technical solutions are described below.

According to a first aspect, an instruction processing method is provided. The method includes: obtaining a to-be-processed first instruction; determining, based on a memory structure and a required speed for reading the first instruction, a compression hierarchy of a memory in the memory structure, where the memory structure is configured to store a compressed first instruction; and compressing the first instruction by using the compression hierarchy.

A size of storage space occupied by the first instruction is reduced by compressing the first instruction. A memory structure with a same capacity can store more compressed first instructions than uncompressed first instructions. This increases a quantity of instructions stored in the memory structure, and reduces storage overheads of the memory structure. Because the first instruction is compressed based on the compression hierarchy of the memory, and the compression hierarchy is determined based on the required speed, a process of restoring the compressed first instruction meets the required speed of the memory structure, and the process of restoring the compressed first instruction does not affect normal running of the memory in the memory structure.

In a possible implementation, before the determining, based on the memory structure and the required speed for reading the first instruction, the compression hierarchy of the memory in the memory structure, the method further includes: obtaining at least one of a path attribute of a read path of each memory included in the memory structure or read efficiency of the memory structure, where the read path of the memory is a path connecting the memory and a read module, and the read module is configured to read an instruction stored in the memory and process the read instruction; and determining, based on at least one of the path attribute or the read efficiency, the required speed for reading the first instruction. The required speed for reading the first instruction is determined based on at least one of the path attribute or the read efficiency, so that the determined required speed better conforms to an actual running status of the memory structure, and the determined required speed has high precision.

In a possible implementation, the determining, based on the memory structure and the required speed for reading the first instruction, the compression hierarchy of the memory in the memory structure includes: determining a read speed of each memory included in the memory structure; determining a restoration speed of each memory based on the required speed for reading the first instruction and the read speed of each memory, where the restoration speed of the memory is a speed of decompressing, on the read path of the memory, the instruction stored in the memory; and determining a compression hierarchy of each memory based on the restoration speed of each memory, where a compression speed corresponding to the compression hierarchy of the memory matches the restoration speed corresponding to the memory.

Completely reading the first instruction from the memory structure includes reading the first instruction and restoring the first instruction. Therefore, when normal running of the memory is ensured, the restoration speed that can be used to restore the instruction may be determined based on the required speed for reading the first instruction from the memory structure and the read speed of each memory, to select the compression hierarchy that matches the restoration speed. Entirety of the memory structure is combined with locality of the memory, so that the determined compression hierarchy has high precision. In addition, the compression hierarchy matches the restoration speed of each memory, so that compression performed based on the compression hierarchy does not affect normal running of each memory.

In a possible implementation, the memory structure includes a storage module and a cache module, a compression hierarchy of the storage module is two-layer compression, a compression hierarchy of the cache module is single-layer compression, and a restoration speed of the single-layer compression is higher than a restoration speed of the two-layer compression; and the compressing the first instruction by using the compression hierarchy includes: compressing the first instruction by using a compression manner of the single-layer compression, to obtain a second instruction; and compressing the second instruction by using a compression manner of the two-layer compression, to obtain a third instruction, where a compression rate of the compression manner of the two-layer compression is greater than a compression rate of the compression manner of the single-layer compression. When the memory structure includes a plurality of memories, for example, the storage module and the cache module, multi-segment compression may be performed on the first instruction, so that a bit width of the obtained third instruction is smaller than a bit width of the first instruction, and the storage overheads are smaller. Different compression manners may be used for different memories, for example, the storage module and the cache module, and a compression process is highly flexible.

In a possible implementation, a ratio of a bit width of the first instruction to a bit width of the second instruction is equal to a compression ratio, and before the compressing the first instruction by using the compression manner of the single-layer compression, to obtain the second instruction, the method further includes: obtaining a service feature of the first instruction, where the service feature indicates a running quality requirement of a service that is run according to the first instruction; and determining the compression ratio based on the service feature of the first instruction. The compression ratio is determined based on the service feature of the first instruction, so that running quality of the service that is run according to the first instruction is ensured.

In a possible implementation, the compressing the first instruction by using the compression manner of the single-layer compression, to obtain the second instruction includes: obtaining an instruction feature of the first instruction; and compressing, when determining, based on the instruction feature, that fixed-length compression is supported, the first instruction by using a fixed-length compression manner, to obtain the second instruction; or splitting, when determining, based on the instruction feature, that the fixed-length compression is not supported, the first instruction into a plurality of second instructions, where bit widths of the plurality of second instructions are the same. Whether the first instruction supports the fixed-length compression is determined based on the instruction feature. The fixed-length compression is performed on the first instruction that supports the fixed-length compression, and splitting is performed on the first instruction that does not support the fixed-length compression, so that the first instruction is flexibly processed based on the instruction feature. Regardless of whether the first instruction supports the fixed-length compression, the first instruction can be processed to obtain the second instruction with the uniform bit width, and universality is extensive.

In a possible implementation, the instruction feature includes at least one of an instruction type, a usage frequency, or a field utilization rate of the first instruction. Instruction features in the method are various and highly flexible.

In a possible implementation, the compressing the first instruction by using the fixed-length compression manner, to obtain the second instruction includes: determining a valid field of the first instruction, to obtain the second instruction including the valid field, where the valid field is a field used for running the first instruction. The second instruction is determined based on the valid field, to ensure that a field carried in the second instruction is a necessary field for running the instruction, so that a field utilization rate of the second instruction is improved and reliable execution of the second instruction is ensured.

In a possible implementation, the second instruction includes a compression flag bit, and the compression flag bit indicates that the second instruction is obtained by using the fixed-length compression manner or a splitting manner. A manner of obtaining the second instruction is made clear by using the compression flag bit. A determining process is simple and efficient. In addition, this can facilitate subsequent restoration of the instruction and improve restoration efficiency.

In a possible implementation, the compressing the second instruction by using the compression manner of the two-layer compression, to obtain the third instruction includes: obtaining an occurrence frequency of each field included in the second instruction; and obtaining the third instruction based on the occurrence frequency of each field, where the third instruction includes a code of each field, the code of each field is determined based on the occurrence frequency of each field, and a length of the code of each field is in inverse proportion to the occurrence frequency of each field. Because the length of the code of each field is in inverse proportion to the occurrence frequency of each field, a field that occurs more corresponds to a shorter code length. This effectively reduces a length of the third instruction.

In a possible implementation, before the obtaining the third instruction based on the occurrence frequency of each field, the method further includes: constructing, based on the occurrence frequency of each field, a code dictionary corresponding to the second instruction, where the code dictionary includes each field and the occurrence frequency of each field; and determining the code of each field based on the code dictionary. Statistics on the occurrence frequency of each field is collected by using the code dictionary. Subsequently, compression of the second instruction may be implemented by searching the code dictionary. A compression process is simple and efficient.

In a possible implementation, the third instruction includes a code index, and the code index is used to search, in a process of decompressing the third instruction, for a field corresponding to a code included in the third instruction. Because the third instruction carries the code index, in the subsequent process of decompressing the third instruction, the field corresponding to the code included in the third instruction may be determined by parsing the code index, to implement decompression of the third instruction. The decompression process is simple, and decompression efficiency is high.

In a possible implementation, after the compressing the first instruction by using the compression hierarchy, the method further includes: obtaining an instruction length of the compressed first instruction; and determining, based on the instruction length, a storage unit that is in the memory structure and that is configured to store the compressed first instruction, and storing the compressed first instruction in the determined storage unit. The storage unit used for storage is first determined based on the instruction length of the compressed first instruction, and then the compressed first instruction is stored in the storage unit, to implement precise storage of the compressed first instruction.

In a possible implementation, the first instruction includes an instruction for forwarding an application program. By compressing the first instruction, efficiency for reading the first instruction is improved, so that efficiency of forwarding performed according to the first instruction is higher.

In a possible implementation, the obtaining the to-be-processed first instruction includes: obtaining at least one instruction included in an instruction bundle, where any one of the at least one instruction is the to-be-processed first instruction, and the at least one instruction is an instruction executed in parallel. The processed first instruction may be an instruction included in the instruction bundle, and a quantity of processed instructions is not limited. There may be one processed first instruction, or may be a plurality of first instructions. Universality is extensive. At least one instruction to be executed in parallel may also be compressed by using the instruction processing method, so that storage space occupied by the instruction bundle is reduced while efficiency of parallel processing is ensured. In addition, the instruction bundle including the at least one instruction is, for example, a very long instruction word, and the method may be further applied to an application scenario of the very long instruction word.

According to a second aspect, another instruction processing method is provided. The method includes: obtaining a compressed first instruction, where compression of a first instruction is implemented based on a compression hierarchy, the compression hierarchy is determined based on a memory structure and a required speed for reading the first instruction, and the memory structure is configured to store the compressed first instruction; and restoring the compressed first instruction.

Storage space occupied by the compressed first instruction is smaller than storage space occupied by the first instruction, and a memory structure with a same memory size can store more compressed first instructions, so that a quantity of instructions stored in the memory structure is increased. The compressed first instruction may be restored, so that normal implementation of a subsequent related operation according to the first instruction is ensured.

In a possible implementation, the memory structure includes a storage module and a cache module, a compression hierarchy of the storage module is two-layer compression, a compression hierarchy of the cache module is single-layer compression, a restoration speed of the single-layer compression is higher than a restoration speed of the two-layer compression, and the compressed first instruction includes a third instruction; and the restoring the compressed first instruction includes: restoring the third instruction by using a restoration manner corresponding to a compression manner of the two-layer compression, to obtain a second instruction; and restoring the second instruction by using a restoration manner corresponding to a compression manner of the single-layer compression, to obtain the first instruction, where a compression rate of the compression manner of the two-layer compression is greater than a compression rate of the compression manner of the single-layer compression. Even if the memory structure includes a plurality of memories, for example, the storage module and the cache module, multi-segment restoration may be performed on the third instruction, and each segment of restoration is a restoration manner corresponding to a compression hierarchy of the memory, in other words, each segment of restoration does not affect normal running of the memory.

In a possible implementation, the third instruction includes a code index, and the restoring the third instruction by using the restoration manner corresponding to the compression manner of the two-layer compression, to obtain the second instruction includes: parsing the code index included in the third instruction; and determining, based on the code index, each field corresponding to each code included in the third instruction, and determining the second instruction based on each field corresponding to each code, where a length of the code of each field is in inverse proportion to an occurrence frequency of each field. A correspondence between the code and the field may be determined by using the code index, to implement restoration of the third instruction. A restoration process is simple and efficient.

In a possible implementation, the restoration manner corresponding to the compression manner of the single-layer compression includes decompression corresponding to fixed-length compression or concatenation corresponding to splitting, and the restoring the second instruction by using the restoration manner corresponding to the compression manner of the single-layer compression, to obtain the first instruction includes: performing, when the second instruction is obtained by using a fixed-length compression manner, decompression corresponding to the fixed-length compression on the second instruction, to obtain the first instruction; or concatenating, when the second instruction is obtained by using a splitting manner, a plurality of second instructions obtained by splitting the first instruction, to obtain the first instruction, where bit widths of the plurality of second instructions are the same. Regardless of whether the fixed-length compression or the splitting is used, there is a corresponding restoration manner, and there are a plurality of types of second instructions that can be restored. Universality is high.

In a possible implementation, the second instruction includes a compression flag bit, the compression flag bit indicates that the second instruction is obtained by using the fixed-length compression manner or the splitting manner, and before the restoring the second instruction by using the restoration manner corresponding to the compression manner of the single-layer compression, to obtain the first instruction, the method further includes: parsing the compression flag bit included in the second instruction, and determining, based on the compression flag bit, from the fixed-length compression and the splitting, a manner of obtaining the second instruction. A compression manner used for obtaining the second instruction is determined by parsing the compression flag bit. A determining process is simple, and determining efficiency is high. In addition, this can facilitate subsequent restoration of the instruction and improve restoration efficiency.

In a possible implementation, the obtaining the compressed first instruction includes: extracting at least one instruction stored in a row of storage units of the memory structure; and separating each instruction based on an instruction length of each of the at least one instruction, to obtain the at least one instruction, where the at least one instruction includes the compressed first instruction. Instructions stored in a row of storage units may be extracted at a time, so that a quantity of extracted instructions is large, and efficiency of instruction extraction is high.

In a possible implementation, after the restoring the compressed first instruction, the method further includes: determining an instruction bundle corresponding to the first instruction, where the instruction bundle includes at least one instruction, a compression result of the at least one instruction is stored in a same row of storage units of the memory structure, a compression result of any instruction in the compression result of the at least one instruction is the compressed first instruction, and the at least one instruction is an instruction executed in parallel; and sending the at least one instruction included in the instruction bundle to a decoding module, where the decoding module is configured to parse the at least one instruction. After the first instruction is restored, the at least one instruction is further sent to the decoding module by instruction bundle, so that the decoding module parses the at least one instruction included in the instruction bundle in parallel. The at least one instruction is controlled to be parsed in parallel, to ensure that the at least one instruction can be successfully executed in parallel. Efficiency of processing the at least one instruction is improved through parallel execution. In addition, the method may be further applied to an instruction bundle scenario, and an application scope is wide.

In a possible implementation, the first instruction includes an instruction for forwarding an application program. When the first instruction is used to forward the application program, by compressing the first instruction, efficiency for reading the first instruction is improved, so that efficiency of forwarding performed according to the first instruction is higher.

According to a third aspect, an instruction processing apparatus is provided. The apparatus includes: an obtaining module, configured to obtain a to-be-processed first instruction; a determining module, configured to determine, based on a memory structure and a required speed for reading the first instruction, a compression hierarchy of a memory in the memory structure, where the memory structure is configured to store a compressed first instruction; and a compression module, configured to compress the first instruction by using the compression hierarchy.

In a possible implementation, the obtaining module is further configured to obtain at least one of a path attribute of a read path of each memory included in the memory structure or read efficiency of the memory structure, where the read path of the memory is a path connecting the memory and a read module, and the read module is configured to read an instruction stored in the memory and process the read instruction; and the determining module is further configured to determine, based on at least one of the path attribute or the read efficiency, the required speed for reading the first instruction.

In a possible implementation, the determining module is configured to: determine a read speed of each memory included in the memory structure; determine a restoration speed of each memory based on the required speed for reading the first instruction and the read speed of each memory, where the restoration speed of the memory is a speed of decompressing, on the read path of the memory, the instruction stored in the memory; and determine a compression hierarchy of each memory based on the restoration speed of each memory, where a compression speed corresponding to the compression hierarchy of the memory matches the restoration speed corresponding to the memory.

In a possible implementation, the memory structure includes a storage module and a cache module, a compression hierarchy of the storage module is two-layer compression, a compression hierarchy of the cache module is single-layer compression, and a restoration speed of the single-layer compression is higher than a restoration speed of the two-layer compression. The compression module is configured to: compress the first instruction by using a compression manner of the single-layer compression, to obtain a second instruction; and compress the second instruction by using a compression manner of the two-layer compression, to obtain a third instruction, where a compression rate of the compression manner of the two-layer compression is greater than a compression rate of the compression manner of the single-layer compression.

In a possible implementation, a ratio of a bit width of the first instruction to a bit width of the second instruction is equal to a compression ratio. The obtaining module is further configured to obtain a service feature of the first instruction, where the service feature indicates a running quality requirement of a service that is run according to the first instruction. The determining module is further configured to determine the compression ratio based on the service feature of the first instruction.

In a possible implementation, the compression module is configured to: obtain an instruction feature of the first instruction; and compress, when determining, based on the instruction feature, that fixed-length compression is supported, the first instruction by using a fixed-length compression manner, to obtain the second instruction; or split, when determining, based on the instruction feature, that the fixed-length compression is not supported, the first instruction into a plurality of second instructions, where bit widths of the plurality of second instructions are the same.

In a possible implementation, the instruction feature includes at least one of an instruction type, a usage frequency, or a field utilization rate of the first instruction.

In a possible implementation, the compression module is configured to determine a valid field of the first instruction, to obtain the second instruction including the valid field, where the valid field is a field used for running the first instruction.

In a possible implementation, the second instruction includes a compression flag bit, and the compression flag bit indicates that the second instruction is obtained by using the fixed-length compression manner or a splitting manner.

In a possible implementation, the compression module is configured to: obtain an occurrence frequency of each field included in the second instruction; and obtain the third instruction based on the occurrence frequency of each field, where the third instruction includes a code of each field, the code of each field is determined based on the occurrence frequency of each field, and a length of the code of each field is in inverse proportion to the occurrence frequency of each field.

In a possible implementation, the determining module is further configured to: construct, based on the occurrence frequency of each field, a code dictionary corresponding to the second instruction, where the code dictionary includes each field and the occurrence frequency of each field; and determine the code of each field based on the code dictionary.

In a possible implementation, the third instruction includes a code index, and the code index is used to search, in a process of decompressing the third instruction, for a field corresponding to a code included in the third instruction.

In a possible implementation, the apparatus further includes: a storage module, configured to: obtain an instruction length of the compressed first instruction; and determine, based on the instruction length, a storage unit that is in the memory structure and that is configured to store the compressed first instruction, and store the compressed first instruction in the determined storage unit.

In a possible implementation, the first instruction includes an instruction for forwarding an application program.

In a possible implementation, the obtaining module is configured to obtain at least one instruction included in an instruction bundle, where any one of the at least one instruction is the to-be-processed first instruction, and the at least one instruction is an instruction executed in parallel.

According to a fourth aspect, another instruction processing apparatus is provided. The apparatus includes: an obtaining module, configured to a compressed first instruction, where compression of a first instruction is implemented based on a compression hierarchy, the compression hierarchy is determined based on a memory structure and a required speed for reading the first instruction, and the memory structure is configured to store the compressed first instruction; and a restoration module, configured to restore the compressed first instruction.

In a possible implementation, the memory structure includes a storage module and a cache module, a compression hierarchy of the storage module is two-layer compression, a compression hierarchy of the cache module is single-layer compression, a restoration speed of the single-layer compression is higher than a restoration speed of the two-layer compression, and the compressed first instruction includes a third instruction. The restoration module is configured to: restore the third instruction by using a restoration manner corresponding to a compression manner of the two-layer compression, to obtain a second instruction; and restore the second instruction by using a restoration manner corresponding to a compression manner of the single-layer compression, to obtain the first instruction, where a compression rate of the compression manner of the two-layer compression is greater than a compression rate of the compression manner of the single-layer compression.

In a possible implementation, the third instruction includes a code index, and the restoration module is configured to: parse the code index included in the third instruction; and determine, based on the code index, each field corresponding to each code included in the third instruction, and determine the second instruction based on each field corresponding to each code, where a length of the code of each field is in inverse proportion to an occurrence frequency of each field.

In a possible implementation, the restoration manner corresponding to the compression manner of the single-layer compression includes decompression corresponding to fixed-length compression or concatenation corresponding to splitting. The restoration module is configured to: perform, when the second instruction is obtained by using a fixed-length compression manner, decompression corresponding to the fixed-length compression on the second instruction, to obtain the first instruction; or concatenate, when the second instruction is obtained by using a splitting manner, a plurality of second instructions obtained by splitting the first instruction, to obtain the first instruction, where bit widths of the plurality of second instructions are the same.

In a possible implementation, the second instruction includes a compression flag bit, and the compression flag bit indicates that the second instruction is obtained by using the fixed-length compression manner or a splitting manner. The restoration module is further configured to: parse the compression flag bit included in the second instruction, and determine, based on the compression flag bit, from the fixed-length compression and the splitting, a manner of obtaining the second instruction.

In a possible implementation, the obtaining module is configured to: extract at least one instruction stored in a row of storage units of the memory structure; and separate each instruction based on an instruction length of each of the at least one instruction, to obtain the at least one instruction, where the at least one instruction includes the compressed first instruction.

In a possible implementation, the apparatus further includes: a sending module, configured to: determine an instruction bundle corresponding to the first instruction, where the instruction bundle includes at least one instruction, a compression result of the at least one instruction is stored in a same row of storage units of the memory structure, a compression result of any instruction in the compression result of the at least one instruction is the compressed first instruction, and the at least one instruction is an instruction executed in parallel; and send the at least one instruction included in the instruction bundle to a decoding module, where the decoding module is configured to parse the at least one instruction.

In a possible implementation, the first instruction includes an instruction for forwarding an application program.

According to a fifth aspect, an instruction processing device is provided. The device includes a processor. The processor is configured to load and execute at least one instruction, to enable the instruction processing device to perform the method in any one of the first aspect or the possible implementations of the first aspect, or perform the method in any one of the second aspect or the possible implementations of the second aspect.

In a possible implementation, the device includes a memory, the memory is coupled to the processor, and the memory stores the at least one instruction.

According to a sixth aspect, a computer-readable storage medium is provided. The computer-readable storage medium stores at least one instruction, and the instruction is loaded and executed by a processor to implement the instruction processing method in any one of the first aspect or the possible implementations of the first aspect, or implement the instruction processing method in any one of the second aspect or the possible implementations of the second aspect.

According to a seventh aspect, a computer program (product) is provided. The computer program (product) includes a computer program or instructions, and the computer program or the instructions are executed by a processor, to enable a computer to implement the instruction processing method in any one of the first aspect or the possible implementations of the first aspect, or implement the instruction processing method in any one of the second aspect or the possible implementations of the second aspect.

According to an eighth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method in any one of the first aspect or the possible implementations of the first aspect, or perform the method in any one of the second aspect or the possible implementations of the second aspect. Optionally, the communication apparatus may be a chip.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a ninth aspect, a chip is provided, and includes a processor, configured to invoke, from a memory, running program instructions or code stored in the memory and run the running program instructions or the code, to enable a communication device in which the chip is installed to perform the methods in the foregoing aspects.

According to a tenth aspect, another chip is provided, and includes an input interface, an output interface, a processor, and a memory. The input interface, the output interface, the processor, and the memory are connected through an internal connection path. The processor is configured to execute code in the memory, and when the code is executed, the processor is configured to perform the methods in the foregoing aspects.

It should be understood that the instruction processing apparatuses mentioned in the third aspect and the fourth aspect each may be the device mentioned in the fifth aspect, or may be the chip mentioned in the ninth aspect or the tenth aspect. It should be understood that, for beneficial effects achieved by the technical solutions of the third aspect to the tenth aspect of this application and the corresponding possible implementations, refer to the foregoing technical effects of the first aspect and the corresponding possible implementations of the first aspect or the second aspect and the corresponding possible implementations of the second aspect. Details are not described herein again.

### BRIEF DESCRIPTION OF DRAWINGS

FIG. 1 is a diagram of an implementation environment according to an embodiment of this application;
FIG. 2 is a diagram of another implementation environment according to an embodiment of this application;
FIG. 3 is a flowchart of an instruction processing method according to an embodiment of this application;
FIG. 4 is a diagram of a structure of a processor according to an embodiment of this application;
FIG. 5 is a diagram of an instruction processing process according to an embodiment of this application;
FIG. 6 is a diagram of structures of a first instruction and a second instruction according to an embodiment of this application;
FIG. 7 is a diagram of a two-segment compression process according to an embodiment of this application;
FIG. 8 is a flowchart of instruction compression according to an embodiment of this application;
FIG. 9 is a flowchart of an instruction processing method according to an embodiment of this application;
FIG. 10 is a diagram of an instruction reading process according to an embodiment of this application;
FIG. 11 is a diagram of a decompression process according to an embodiment of this application;
FIG. 12 is a diagram of an effect of fixed-length restoration according to an embodiment of this application;
FIG. 13 is a flowchart of fixed-length restoration according to an embodiment of this application;
FIG. 14 is another flowchart of fixed-length restoration according to an embodiment of this application;
FIG. 15 is an effect comparison diagram of instruction storage according to an embodiment of this application;
FIG. 16 is a diagram of a structure of an instruction processing apparatus according to an embodiment of this application;
FIG. 17 is a diagram of a structure of another instruction processing apparatus according to an embodiment of this application;
FIG. 18 is a diagram of a structure of a network device according to an embodiment of this application; and
FIG. 19 is a diagram of a structure of another network device according to an embodiment of this application.

### DESCRIPTION OF EMBODIMENTS

Terms used in embodiments of this application are only used to explain specific embodiments of this application, but are not intended to limit this application. To make objectives, technical solutions, and advantages of this application clearer, the following further describes embodiments of this application in detail with reference to accompanying drawings.

In the field of computer technologies, a processor is an operation and control core of a network device, and is configured to run an application program. For example, the processor includes an instruction storage module, a decoding module, and a parallel computing module. The instruction storage module is configured to store instructions obtained by compiling the application program, to achieve a programmable effect. The decoding module is configured to: parse the instruction stored in the instruction storage module to obtain a parsing result, and send the parsing result to the parallel computing module. The parallel computing module performs parallel computing based on parsing results of a plurality of instructions to obtain a plurality of pieces of result data. In this way, the application program is run based on the plurality of pieces of result data.

In a related technology, a run to complete (run to complete, RTC) architecture forwarding processor includes a plurality of processor cores and a plurality of instruction cache modules, one processor core is connected to one instruction cache module, and the plurality of instruction cache modules are connected to one instruction storage module. Hardware overheads of the instruction cache module are less than hardware overheads of the instruction storage module. Replacing a plurality of large-capacity instruction storage modules with a plurality of small-capacity instruction cache modules can reduce hardware overheads of the processor. However, in the foregoing method, in a high-performance service scenario in which a quantity of stored instructions is large, the instruction cache module still needs to provide a large capacity, the hardware overheads of the instruction cache module are increased, and storage overheads are still high.

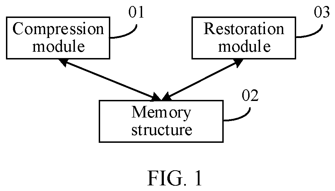

An embodiment of this application provides an instruction processing method. FIG. 1 is a diagram of an implementation environment of an instruction processing method according to an embodiment of this application. The implementation environment includes a compression module 01, a memory structure 02, and a restoration module 03. The compression module 01, the memory structure 02, and the restoration module 03 may establish, in a wired or wireless network manner, a communication connection relationship shown in FIG. 1. In a possible implementation, the compression module 01 is configured to: compress a to-be-processed first instruction by using the method provided in this embodiment of this application, and store a compressed first instruction in the memory structure 02. The restoration module 03 may perform, by using the method provided in this embodiment of this application, a restoration operation on the compressed first instruction stored in the memory structure 02, to obtain the first instruction.

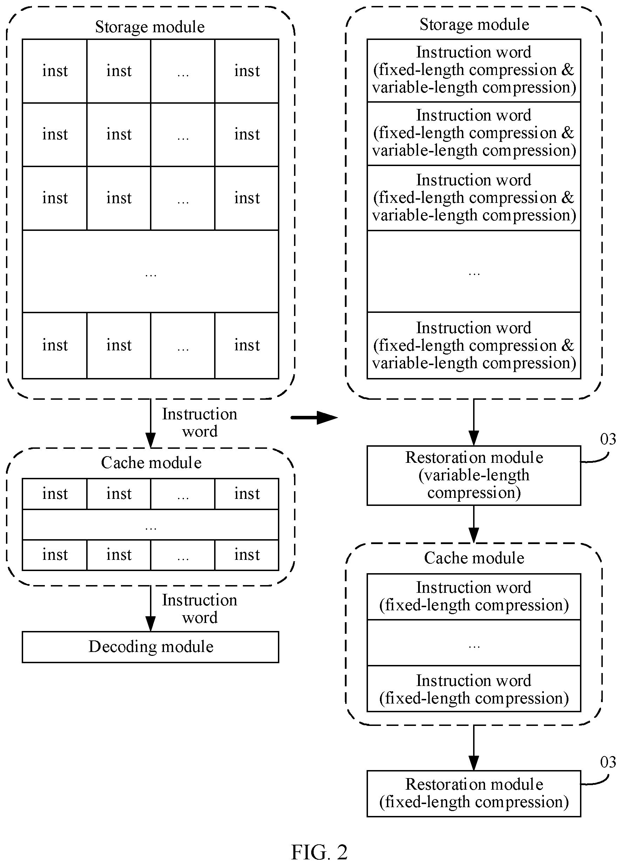

For example, the memory structure 02 in FIG. 1 may include one or more memories. FIG. 2 is a diagram of another implementation environment according to an embodiment of this application. Refer to FIG. 2. A processor includes a storage module, a cache module, and a decoding module. The storage module and the cache module may be configured to store an instruction (inst). In this case, the memories included in the memory structure 02 in FIG. 1 are the storage module and the cache module in the left diagram and the right diagram in FIG. 2. In a possible case, the cache module may be referred to as an instruction cache (instruction cache, ICACHE) module, and is configured to cache an instruction to be processed by the decoding module, to increase a speed of reading the instruction by the decoding module and further increase a speed of parsing the instruction. In the left diagram in FIG. 2, instruction exchange between the storage module, the cache module, and the decoding module is performed by using an instruction word as a whole. The instruction word refers to a plurality of instructions located in a same row of storage units. The same row of storage units may be storage units in the storage module, or may be cache units in the cache module.

When the memory structure 02 shown in FIG. 1 includes a plurality of memories, a restoration module 03 may separately establish a communication connection to each memory included in the memory structure 02. Refer to the right diagram in FIG. 2. The storage module and the cache module in FIG. 2 are separately connected to the restoration module 03. A plurality of restoration modules 03 in the right diagram in FIG. 2 refer to different operation units of the restoration module 03, and restoration operations performed by the different operation units are different. Optionally, a quantity of storage modules and a quantity of cache modules may be the same, in other words, the storage modules are in one-to-one correspondence with the cache modules. Alternatively, a quantity of storage modules and a quantity of cache modules may be different. For example, a plurality of cache modules share one storage module. This is not limited in this embodiment of this application.

Optionally, the compression module 01, the memory structure 02, and the restoration module 03 in FIG. 1 may be integrated into a same network device. The network device may be any network device configured with a processor, and the configured processor may be a programmable processor of any structure, for example, an RTC architecture forwarding processor, or may be a processor of another type. For example, the network device may be a server, for example, a central server, an edge server, or a local server in a local data center. The server may be a physical server, or may be a cloud server that provides a cloud computing service in a cloud scenario. In some embodiments, the network device may alternatively be a terminal device like a desktop computer, a notebook computer, or a smartphone, or may be a switch (switch), a router (router), a gateway (gateway, GW), or the like. An instruction processing operation performed by the compression module 01 may be implemented based on program compiling. In this case, the compression module 01 is, for example, a compiler. An instruction processing operation performed by the restoration module 03 may be implemented based on hardware running. In this case, the restoration module 03 is, for example, a decoder.

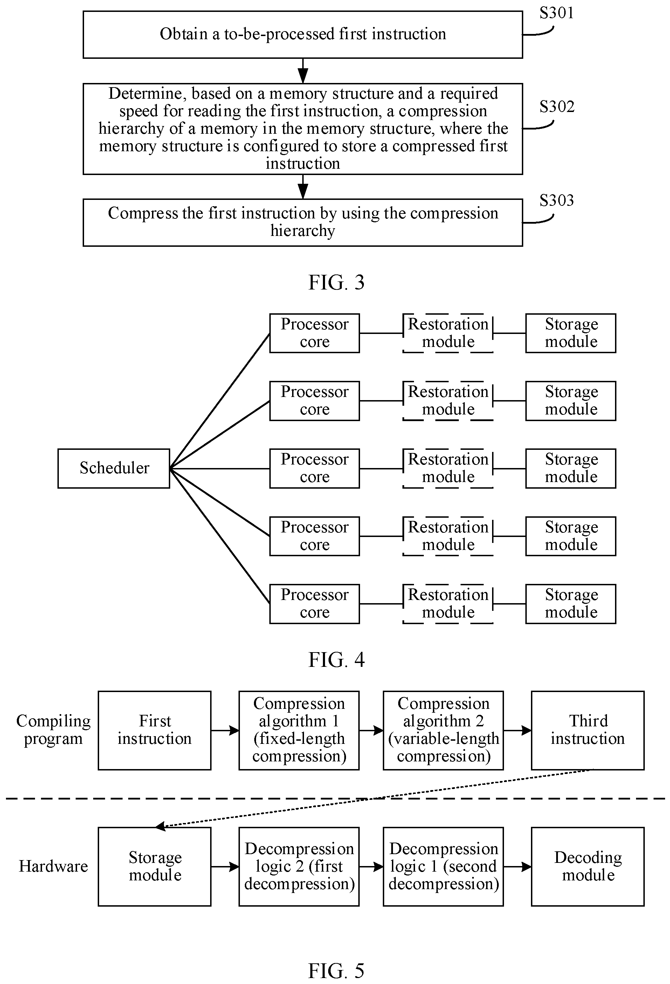

An embodiment of this application provides an instruction processing method. The instruction processing method may be applied to the implementation environment shown in FIG. 1 or FIG. 2. For example, the method is performed by a compression module. A flowchart of the method is shown in FIG. 3, and includes S301 to S303.

S301: Obtain a to-be-processed first instruction.

For example, an instruction is a command that is obtained by compiling an application program and that is used to instruct a network device to work. The network device is, for example, a personal terminal or a server. The to-be-processed first instruction may be an instruction obtained by compiling any application program, for example, an instruction used to forward an application program. The application program includes but is not limited to a game application program, a video playback software application program, a social application software, or the like. Optionally, the compression module may obtain to-be-run code, and convert the obtained code into an instruction, to obtain the to-be-processed first instruction. The to-be-run code may be manually input code, or may be obtained by accessing a code library based on a manually input running requirement. The compression module may alternatively receive the to-be-processed first instruction sent by another device or module. A manner of obtaining the first instruction is not limited in this embodiment of this application.

A quantity of to-be-processed first instructions is not limited in this embodiment of this application, and there may be one to-be-processed first instruction. For example, the compression module determines, based on the code, that the network device may be instructed to work by executing one move (mov) instruction, and determines one mov instruction as the to-be-processed first instruction. Optionally, there may be a plurality of to-be-processed first instructions, and the plurality of first instructions may belong to a same instruction bundle, or may belong to different instruction bundles, where the instruction bundle is, for example, a very long instruction word (very long instruction word, VLIW). Instructions included in an instruction bundle may be classified based on functions corresponding to the instructions, may be classified based on application programs corresponding to the instructions, or may be classified in another manner. A plurality of instructions are connected by using the instruction bundle. Parallel execution is performed on a plurality of instructions included in one instruction bundle, so that an operation speed of executing the plurality of instructions is improved. Performing parallel execution on a plurality of instructions may be performing parallel execution on the plurality of instructions once. For example, one instruction bundle includes three instructions, and parallel execution is performed on the three instructions in one beat, to implement synchronous execution of the three instructions. Performing parallel execution on a plurality of instructions may alternatively be performing parallel execution on the plurality of instructions for a plurality of times. In other words, a manner combining parallel and serial execution is used. For example, one instruction bundle includes eight instructions. Because a maximum of four instructions can be executed in one beat, parallel execution is first performed on the first four instructions, and then performed on the last four instructions after the execution of the first four instructions is completed.

For example, the compression module obtains at least one instruction included in an instruction bundle, where the at least one instruction is an instruction executed in parallel, and any one of the at least one instruction is the to-be-processed first instruction. In other words, each instruction included in the instruction bundle is used as the first instruction and is processed by using the instruction processing method provided in this embodiment of this application. Because a process of processing one first instruction is similar to a process of processing a plurality of first instructions, the following temporarily uses an example in which any instruction included in the instruction bundle is the to-be-processed first instruction to describe a process of processing one first instruction. For a process of processing another instruction that is included in the instruction bundle and that is other than the any instruction, refer to similar descriptions. Details are not described herein.

S302: Determine, based on a memory structure and a required speed for reading the first instruction, a compression hierarchy of a memory in the memory structure, where the memory structure is configured to store a compressed first instruction.

In a possible case, a network device that is instructed by the first instruction to work includes the memory structure, configured to store the to-be-processed first instruction, to achieve a programmable effect. An example in which the network device is configured with an RTC architecture forwarding processor shown in FIG. 4 is used. The RTC architecture forwarding processor includes a scheduler (input scheduler), a processor core (RTC core), a storage module, and the like. The storage module is a memory included in the memory structure. Optionally, a communication connection is established between the processor core and the storage module. The established communication connection may be a direct connection, or may be an indirect connection implemented based on a restoration module. In other words, the processor core is connected to the restoration module, and the restoration module is connected to the storage module. Optionally, there may be one restoration module. In other words, one restoration module is separately connected to a plurality of storage modules and a plurality of processor cores. There may alternatively be a plurality of restoration modules, and a quantity of the plurality of restoration modules may be the same as a quantity of the storage modules. In other words, the restoration modules are in one-to-one correspondence with the processor cores and the storage modules, as shown in FIG. 4. One restoration module is configured to connect one processor core and one storage module. A quantity of the plurality of restoration modules may alternatively be less than a quantity of the storage modules. In other words, one restoration module may be connected to a plurality of storage modules, or may be connected to one storage module.

In a process of storing the first instruction into the memory structure, the compression module may compress the first instruction based on the memory structure and the required speed for reading the first instruction. Optionally, the speed in this application may be understood as a time delay or a clock cycle. The required speed for reading the first instruction is a clock cycle required for reading the first instruction from the memory structure. A unit of measurement for the clock cycle is, for example, a beat or another time unit. In a possible case, reading the first instruction from the memory structure includes a plurality of processes: reading the first instruction from the memory included in the memory structure and processing the read first instruction. The processing is, for example, an operation like restoration.

A process in which the compression module obtains the required speed for reading the first instruction is not limited in this embodiment of this application, and includes but is not limited to: obtaining at least one of a path attribute of a read path of each memory included in the memory structure or read efficiency of the memory structure, where the read path of the memory is a path connecting the memory and a read module, and the read module is configured to read an instruction stored in the memory and process the read instruction; and determining, based on at least one of the path attribute or the read efficiency, the required speed for reading the first instruction.

For example, a read module of a memory is a read module that is connected to the memory and that is configured to read an instruction stored in the memory. For example, the memory structure is a memory structure shown in the left diagram in FIG. 2. When the memory is the storage module, the read module is the cache module. When the memory is the cache module, the read module is the decoding module. For example, the memory structure is a memory structure shown in the right diagram in FIG. 2. When the memory is the storage module, the read module is the restoration module 03 connected to the storage module. When the memory is the cache module, the read module is the restoration module 03 connected to the memory.

Optionally, the compression module may determine the read path connecting each memory and the read module, and determine the path attribute of the read path, where the path attribute is a feature that affects a read delay of the read path, and the path attribute includes but is not limited to a length or a width of the read path. In a possible implementation, the read efficiency is related to a network processor (network processor, NP) corresponding to the memory structure. The compression module may obtain processing performance of the NP corresponding to the memory structure, determine the read efficiency of the memory structure based on the processing performance, and determine, based on the read efficiency and the path attribute of the read path of each memory, the required speed for reading the first instruction stored in the memory structure.

For example, the required speed for reading the first instruction stored in the memory structure is an overall speed required for completely reading the first instruction from the memory structure. When the memory structure includes one memory, the required speed for reading the first instruction includes a speed of reading the first instruction from the one memory and a speed of restoring the read first instruction. When the memory structure includes a plurality of memories, for example, the storage module and the cache module shown in FIG. 2, the required speed for reading the first instruction from the memory structure includes a speed 1 of reading the first instruction from the storage module, a speed 2 of restoring the read first instruction, a speed 3 of sending the first instruction stored in the storage module to the cache module, a speed 4 of reading the first instruction stored in the cache module, and a speed 5 of restoring the read first instruction. Optionally, the required speed for reading the first instruction may alternatively be set based on experience. For example, the compression module provides an information input control, and operation and maintenance personnel set the required speed for reading the first instruction based on the experience and an implementation environment, and input the required speed by using the information input control. In this way, the compression module obtains the required speed for reading the first instruction. The implementation environment may refer to a hardware configuration of the memory structure, for example, a type of the used NP or a model of the memory structure.

Regardless of a manner in which the compression module obtains the required speed for reading the first instruction, the compression module may determine the compression hierarchy of the memory in the memory structure based on the memory structure and the required speed for reading the first instruction. For example, the compression module determines a read speed of each memory included in the memory structure; determines a restoration speed of each memory based on the required speed for reading the first instruction and the read speed of each memory, where the restoration speed of the memory is a speed of decompressing, on the read path of the memory, the instruction stored in the memory; and determines a compression hierarchy of each memory based on the restoration speed of each memory, where a restoration speed corresponding to the compression hierarchy of the memory matches the restoration speed corresponding to the memory.

Optionally, the compression module determines a memory that is in the memory structure and that is to store the first instruction. For example, the memory structure includes one storage module and a plurality of cache modules. The plurality of cache modules share the one storage module. In this case, one first instruction is first stored by the storage module, and then stored by any one of the plurality of cache modules. Therefore, the memory that is in the memory structure and that is to store the first instruction is one storage module and one cache module.

Then, the compression module may determine, based on a hardware structure of each memory, a read speed required for reading an instruction from each memory. The required speed for reading the first instruction is the overall speed of completely reading the first instruction from the memory included in the memory structure, in other words, the required speed includes the read speed of reading the first instruction from the memory and a processing speed of processing the read first instruction, where processing the first instruction includes restoring the first instruction and the like. Therefore, a sum of restoration speeds and read speeds of memories is not greater than the required speed for reading the first instruction. A sum of the read speeds of the memories may be subtracted from the required speed, and an obtained difference indicates a maximum value of a sum of the restoration speeds of the memories. Then, the restoration speed of each memory is determined based on the hardware structure of each memory, for example, the read path of each memory and a read speed required for reading an instruction by the read module of each memory. A restoration speed of any memory indicates a speed of restoring an instruction stored in the any memory, and the restoration speed does not affect original forwarding performance of the memory.

Because the restoration speed is negatively correlated with compression complexity, a compression manner with higher compression complexity corresponds to a lower restoration speed. Therefore, the corresponding compression complexity may be determined based on the restoration speed, and the compression hierarchy may be determined based on the compression complexity. Optionally, a higher compression hierarchy indicates higher compression complexity, a lower restoration speed, and a higher compression rate. The compression rate is a ratio of a compressed instruction to an uncompressed instruction.

Optionally, the compression module may further obtain a speed range corresponding to each compression hierarchy, and determine the compression hierarchy of each memory based on the restoration speed of each memory and the speed range corresponding to each compression hierarchy. For example, the compression hierarchy includes single-layer compression and two-layer compression. A speed range corresponding to single-layer compression is a range A, and a speed range corresponding to two-layer compression is a range B. Because a restoration speed of the storage module is a speed included in the range B, the compression module determines that a compression hierarchy of the storage module is two-layer compression, and the compression module determines that a compression hierarchy of the cache module is single-layer compression based on a restoration speed of the cache module being a speed included in the range A.

In a possible case, the compression module may alternatively directly determine the compression hierarchy of each memory based on the read speed of each memory. The example in which the memory includes the cache module and the storage module is still used. Because a read speed of the storage module is lower than a read speed of the cache module, a compression hierarchy of the storage module is higher than a compression hierarchy of the cache module. For example, the compression hierarchy of the storage module is two-layer compression, the compression hierarchy of the cache module is single-layer compression, and a restoration speed of the single-layer compression is higher than a restoration speed of the two-layer compression.

S303: Compress the first instruction by using the compression hierarchy.

For example, the compression module determines a compression manner of the compression hierarchy of each memory, and compresses the first instruction based on the determined compression manner. Compression manners of different compression hierarchies may be different. For example, a compression manner of the single-layer compression is fixed-length processing, and a compression manner of the two-layer compression is variable-length compression. Compression manners of different compression hierarchies may alternatively be the same, in other words, different compression hierarchies indicate different quantities of compression times. For example, the compression manner of the single-layer compression is performing compression by using a compression algorithm 1, and the compression manner of the two-layer compression is performing primary compression by using the compression algorithm 1 to obtain a compression result 1, and performing secondary compression on the compression result 1 to obtain a compression result 2. The compression result 2 is a result obtained by performing compression by using the compression manner of the two-layer compression.

When the memory structure includes a plurality of memories, there is a compression sequence for the plurality of memories. The example in which the memory structure includes the storage module and the cache module is still used. Refer to FIG. 5. After a third instruction is obtained by compressing the first instruction by separately using the compression algorithm 1 and a compression algorithm 2, the third instruction is stored in the storage module. After being read, the third instruction stored in the storage module is sent to the cache module for caching. In a transmission process, the third instruction is restored. In other words, the third instruction is restored to a second instruction by executing decompression logic 2 corresponding to the compression algorithm 2. Then, the second instruction is cached in the cache module. Then, after being read, the second instruction stored in the cache module is sent to the decoding module for parsing. In a transmission process, the second instruction is restored. In other words, the second instruction is restored to the first instruction by executing decompression logic 1 corresponding to the compression algorithm 1. The decoding module decodes the first instruction. In this case, decompression corresponding to a compression manner of the storage module is first performed, and then decompression corresponding to a compression manner of the cache module is performed. A decompression sequence is opposite to the compression sequence, in other words, restoration corresponding to compression performed later is performed earlier. Therefore, the compression module first performs the compression manner of the cache module, and then performs the compression manner of the storage module.

Optionally, for a memory structure including a plurality of memories, the compression module may first determine a compression manner of each memory, and then determine a compression sequence of each memory, or may first determine a compression sequence of each memory, and then determine a compression manner of each memory. Alternatively, the compression sequence and the compression manner are determined in parallel based on multi-threading. Regardless of a manner in which the compression module determines the compression sequence and the compression manner, the compression module may compress the first instruction by using the compression manner of each memory based on the compression sequence, to obtain the compressed first instruction.

Because a process of compressing the first instruction once is similar to a process of compressing the first instruction for a plurality of times, the following describes the process of compressing the first instruction by using an example in which the memory structure includes the storage module and the cache module, the compression hierarchy of the storage module is the two-layer compression, the compression hierarchy of the cache module is the single-layer compression, and the restoration speed of the single-layer compression is higher than the restoration speed of the two-layer compression.

In a possible implementation, the compression module compresses the first instruction by using the compression manner of the single-layer compression, to obtain the second instruction; and compresses the second instruction by using the compression manner of the two-layer compression, to obtain the third instruction, where a compression rate of the compression manner of the two-layer compression is greater than a compression rate of the compression manner of the single-layer compression. For example, the compression manner of the single-layer compression is fixed-length processing, and a ratio of a bit width of the first instruction to a bit width of the second instruction is equal to a compression ratio. The compression ratio is, for example, any integer that is set based on the experience and the implementation environment. The compression ratio may alternatively be determined based on a service feature. Optionally, the compression module obtains a service feature of the first instruction, where the service feature indicates a running quality requirement of a service that is run according to the first instruction. The compression module determines the compression ratio based on the service feature of the first instruction. The service feature may be determined according to a service-level agreement (service-level agreement, SLA), and the service feature includes but is not limited to a running delay, a packet loss rate, and the like of the service. The compression module obtains the service feature, and determines, based on the service feature, a compression ratio that can be implemented without affecting running quality of the service. For example, the compression ratio determined based on the service feature may be 2. When the first instruction is 64 bits, the second instruction obtained through fixed-length processing is 32 bits. When the first instruction is 8 bits, the second instruction obtained through fixed-length processing is 4 bits. In this case, the second instruction obtained by performing fixed-length processing on the first instruction may also be referred to as a half-width instruction.

In a possible case, the fixed-length processing includes fixed-length compression or splitting. In this case, the compression module may obtain an instruction feature of the first instruction; and compress, when determining, based on the instruction feature, that the fixed-length compression is supported, the first instruction by using a fixed-length compression manner, to obtain the second instruction; or split, when determining, based on the instruction feature, that the fixed-length compression is not supported, the first instruction into a plurality of second instructions, where bit widths of the plurality of second instructions are the same.

For example, the instruction feature of the first instruction includes at least one of an instruction type, a usage frequency, or a field utilization rate of the first instruction. The instruction type may be functional classification of an instruction. For example, the instruction type includes a transfer instruction or a memory access instruction. The instruction type may alternatively be classified based on a format of an instruction. For example, the instruction type includes a two-operand instruction, a single-operand instruction, or a program transfer instruction. Optionally, the usage frequency of the first instruction may reflect a quantity of times instructions with same functions are used within reference time. The reference time may be any time unit that is set based on the experience and the implementation environment. For example, the reference time is 1 second. For example, the first instruction is a move (mov) instruction. The compression module collects statistics on a quantity of mov instructions executed within 1 second, and collects statistics on a usage frequency of the mov instruction. The usage frequency may alternatively refer to a proportion of a function instruction corresponding to the first instruction in a plurality of instructions for running an application program. In a possible case, the field utilization rate is used to reflect a quantity of blank fields included in the first instruction.

The compression module may choose to determine, based on at least one of the instruction type, the usage frequency, or the field utilization rate, whether the fixed-length compression can be performed on the first instruction. The following separately describes implementations of determining, based on the three instruction features, whether the fixed-length compression can be performed on the first instruction.

Implementation 1: Obtain an instruction type that supports the fixed-length compression; and determine, when the obtained instruction type includes the instruction type of the first instruction, to perform the fixed-length compression on the first instruction.

For example, the instruction type that supports the fixed-length compression may be manually input. For example, a network device in which the compression module is located provides an information input control, and operation and maintenance personnel input, by using the information input control, the instruction type that supports the fixed-length compression, so that the compression module obtains an instruction type set that supports the fixed-length compression. For example, the instruction type includes a mov instruction and an add (add) instruction. Because a size of a blank field not used in the mov instruction is greater than a first threshold that is set based on the experience, unused space of the mov instruction is large, and the fixed-length compression can be performed on the mov instruction. However, a size of a blank field not used in the add instruction is less than the first threshold that is set based on the experience, unused space of the add instruction is small, and the fixed-length compression cannot be performed on the add instruction. Based on this, the instruction type that supports the fixed-length compression and that is input by the operation and maintenance personnel by using the information input control includes the mov instruction. In a possible case, the compression module may alternatively obtain, by learning historical data, an instruction type set that supports the fixed-length compression. The historical data is, for example, a compression result obtained by performing the fixed-length compression on each instruction type. Statistics on success rates of performing the fixed-length compression on different instruction types are collected through machine learning, to determine the instruction type that supports the fixed-length compression.

Implementation 2: Determine, when the usage frequency is greater than a second threshold, to perform the fixed-length compression on the first instruction; or determine, when the usage frequency is not greater than a second threshold, not to perform the fixed-length compression on the first instruction.

Optionally, the second threshold may be any value that is set based on the experience, for example, 70% or 50%. When the usage frequency of the first instruction is greater than the second threshold, the first instruction is a frequently used instruction, and the first instruction is cached in the cache module for a large quantity of times, and occupies high storage overheads. Therefore, the fixed-length compression is performed on the first instruction, to reduce cache space occupied by the first instruction in the cache module, and further reduce the storage overheads of the first instruction. However, if the usage frequency of the first instruction is not greater than the second threshold, it indicates that the first instruction is not a frequently used instruction, and the first instruction is cached in the cache module for a small quantity of times. If the fixed-length compression is performed on the first instruction, the first instruction obtained through fixed-length compression needs to be restored subsequently. Although the storage overheads are reduced, added restoration overheads of restoring the compressed first instruction are greater than reduced storage overheads, and instruction overheads are still high.

Implementation 3: Determine, when the field utilization rate is less than a third threshold, to perform the fixed-length compression on the first instruction; or determine, when the field utilization rate is not less than a third threshold, not to perform the fixed-length compression on the first instruction.

Optionally, the third threshold may be set based on the compression ratio. When the fixed-length compression is used to compress the first instruction into a half-width instruction with half the bit width, the third threshold may be 50%. When the field utilization rate is less than 50%, it indicates that there are a large quantity of unused idle fields in the first instruction, and the first instruction may be compressed into the half-width instruction by deleting the idle fields. When the field utilization rate is greater than 50%, because there are a small quantity of unused idle fields in the first instruction, even if all the idle fields are deleted, the half-width instruction cannot be obtained, but further processing is needed. A processing process is redundant and complex, and efficiency is low. Therefore, the fixed-length compression is not performed on the first instruction.

The compression module may determine, based on the instruction feature by using any one of Implementation 1, Implementation 2, and Implementation 3, whether the fixed-length compression can be performed on the first instruction. Alternatively, the compression module may determine, by combining a plurality of implementations, for example, combining the instruction type and the field utilization rate, whether the fixed-length compression can be performed on the first instruction. In this case, one instruction feature corresponds to one determining result. When determining results are different, for example, it is determined, based on the instruction type, that the fixed-length compression cannot be performed on the first instruction, and it is determined, based on the field utilization rate, that the fixed-length compression can be performed on the first instruction, the determining result may be determined based on weights of different instruction types. For example, a weight of the instruction type that is set based on the experience is less than a weight of the field utilization rate. Because the field utilization rate indicates that the fixed-length compression can be performed on the first instruction, the compression module determines to perform the fixed-length compression on the first instruction.

Regardless of a manner in which the compression module determines whether the fixed-length compression can be performed on the first instruction, the compression module may perform the fixed-length processing on the first instruction based on the determining result. For example, a process of performing the fixed-length compression on the first instruction includes: determining a valid field of the first instruction, to obtain the second instruction including the valid field. The valid field is a field used for running the first instruction. The field is, for example, a non-blank field, a repeated field, or a mandatory field that is indispensable in an instruction running process.

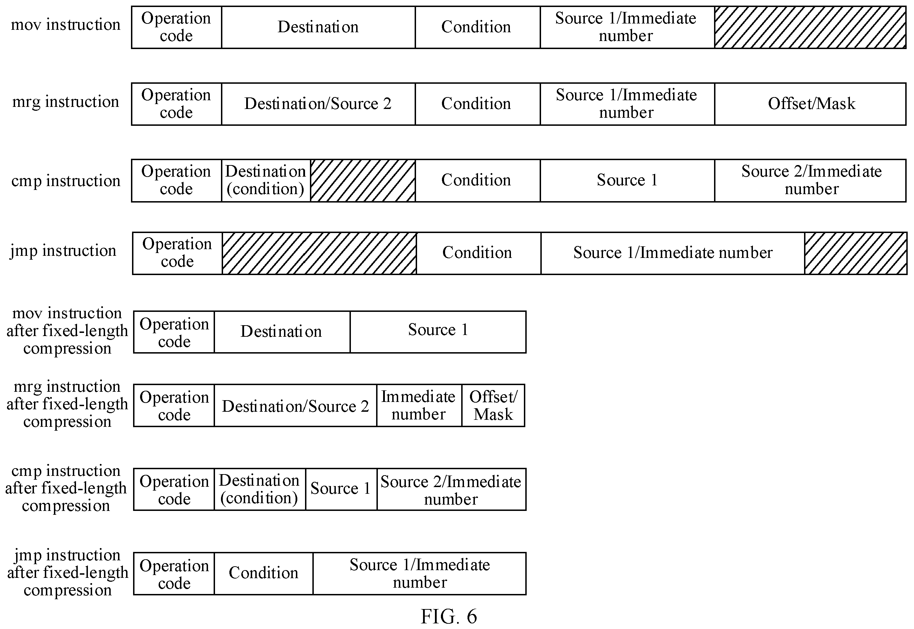

FIG. 6 is a diagram of a valid field according to an embodiment of this application. FIG. 6 shows four instructions: a mov instruction, a merge (mrg) instruction, a compare (cmp) instruction, and a jump (jmp) instruction. Refer to FIG. 6. The mov instruction includes an operation code (opcode) field, an ineffective condition (cond) field, a destination (destination, Dst) operand field, and a source (source, Src) 1 operand/an immediate number (IMM) field, and diagonal shading in FIG. 6 indicates blank fields. In FIG. 6, non-blank fields in the mov instruction include the opcode field, the ineffective cond field, the Dst field, and the Src1/IMM field. Because the mov instruction only needs to use the opcode field, the Dst field, and the Src1 field, and does not need to use the ineffective cond field, valid fields in the mov instruction are the opcode field, the Dst field, and the Src1 field. Valid fields in the mrg instruction, the cmp instruction, and the jmp instruction may be determined with reference to the mrg instruction, the cmp instruction, and the jmp instruction in FIG. 6 and an mrg instruction obtained through fixed-length compression, a cmp instruction obtained through fixed-length compression, and a jmp instruction obtained through fixed-length compression.

After determining the valid field of the first instruction, the compression module may determine the second instruction based on the valid field. Optionally, the compression module may extract the valid field included in the first instruction, and concatenate the valid field to obtain the second instruction. Alternatively, the compression module may scale down the valid field, and concatenate the scaled-down valid field to obtain the second instruction. Scaling down the valid field refers to reducing a bit occupied by the valid field: determining a first bit occupied by information carried in the valid field, determining a second bit occupied by the valid field, and adjusting the bit occupied by the valid field from the second bit to the first bit. For example, a size of the valid field is 6 bits, and the information carried in the valid field occupies 4 bits. Therefore, the valid field may be scaled down to 4 bits. In FIG. 6, the compression module extracts the opcode field, the Dst field, and the Src1 field, scales down the opcode field, the Dst field, and the Src1 field, and concatenates a scaled-down opcode field, Dst field, and Src1 field, to form the mov instruction, namely, the second instruction, obtained through fixed-length compression in FIG. 6. In a possible case, the compression module may alternatively narrow a data selection range of the valid field. For example, the compression module determines a common selection range of a valid field whose usage frequency is greater than a reference threshold, and uses the common selection range as the data selection range indicated by the valid field. For example, in the mrg instruction in FIG. 6, low address space and a small immediate number are used for data selection, where the small immediate number indicates an immediate number whose value is less than a fourth threshold, the low address space indicates address space whose value is less than a fifth threshold, and the fourth threshold and the fifth threshold may be values that are set based on the experience and the implementation environment. In this case, the small immediate number may be changed to one field to narrow the data selection range. In a possible case, the foregoing fixed-length compression process may also be referred to as instruction set architecture compression (instruction set architecture compression, ISA compression) or instruction set compression.

For the first instruction on which the fixed-length compression cannot be performed, the compression module further splits the first instruction, and splits the first instruction into second instructions with same compression ratios and bit widths. In the foregoing splitting process, a splitting location of the first instruction may be determined based on an instruction structure of the first instruction, for example, may be determined in the instruction structure of the first instruction based on the compression ratio, and the first instruction is split at the splitting location to obtain a plurality of second instructions. For example, the compression ratio is 2, and the first instruction is 8 bits. Because 8 divided by 2 is equal to 4, it is determined that the splitting location of the first instruction is a midpoint of the instruction structure, namely, a location of a 4^{th} bit. The first instruction is split into a 1^{st} second instruction including the first four bits and a 2^{nd} second instruction including the last four bits. Sizes of the second instructions are unified by splitting the first instruction or performing the fixed-length compression on the first instruction. A bit width ratio of the instructions is standardized, so that a subsequent process of compressing the second instructions with a unified bit width ratio is simpler, and compression efficiency is higher.

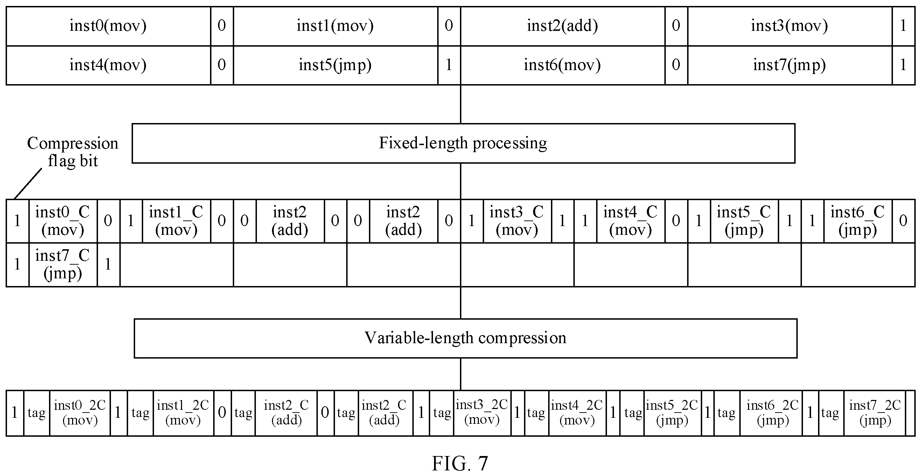

The compression module may perform the fixed-length compression on the first instruction to obtain the second instruction, or may split the first instruction to obtain the second instruction. Therefore, the second instruction includes a compression flag bit, where the compression flag bit indicates that the second instruction is obtained through fixed-length compression or splitting. Refer to FIG. 7. FIG. 7 includes eight to-be-processed first instructions. A digit after inst is used to distinguish between different first instructions, and English in parentheses is an instruction type of the first instruction, to be specific, mov indicates that the first instruction is a mov instruction, add indicates that the first instruction is an add instruction, and jmp indicates that the first instruction is a jmp instruction. 0 and 1 after each first instruction in FIG. 7 are used as boundary bits (boundary bits) of an instruction bundle. When the boundary bit is 0, it is determined that the instruction is not the last instruction in the instruction bundle. When the boundary bit is 1, it is determined that the instruction is the last instruction in the instruction bundle. In other words, in FIG. 7, inst0, inst1, inst2, and inst3 belong to a same instruction bundle, inst4 and inst5 belong to a same instruction bundle, and inst6 and inst7 belong to a same instruction bundle.

The compression module performs the fixed-length processing on the eight first instructions in FIG. 7, to obtain a plurality of second instructions. In FIG. 7, the second instruction includes a compression flag bit, and different fixed-length processing may be indicated by assigning values to the compression flag bit. For example, when the compression flag bit is a first value, it is determined that a manner of obtaining the second instruction is the fixed-length compression; or when the compression flag bit is a second value, it is determined that a manner of obtaining the second instruction is the splitting. The first value and the second value may be any different values that are set based on the experience. The first value is, for example, 1, and the second value is, for example, 0.

In FIG. 7, a manner of obtaining a second instruction of the mov instruction is the fixed-length compression, and the first value 1 is assigned to a compression flag bit before inst0_C. A manner of obtaining a second instruction of the add instruction is the splitting, and the second value 0 is assigned to a compression flag bit before inst2 (add). In FIG. 7, the compression module splits the add instruction. Therefore, there are two second instructions corresponding to the add instruction. In FIG. 7, C in the second instruction of the mov instruction and the second instruction of the jmp instruction indicates primary compression.

After the fixed-length processing is performed on the first instruction to obtain the second instruction, the compression manner of the two-layer compression may be performed on the second instruction, to reduce a size of the second instruction. Because a restoration manner corresponding to the two-layer compression is performed on a read path from the storage module to the cache module, and a requirement on an instruction read speed of the cache module is low, a restoration speed of the compression manner of the two-layer compression used by the compression module may be lower than a restoration speed of the compression manner of the single-layer compression. The compression manner of the two-layer compression includes but is not limited to variable-length compression, where the variable-length compression indicates that a length of an instruction obtained through compression is not fixed.

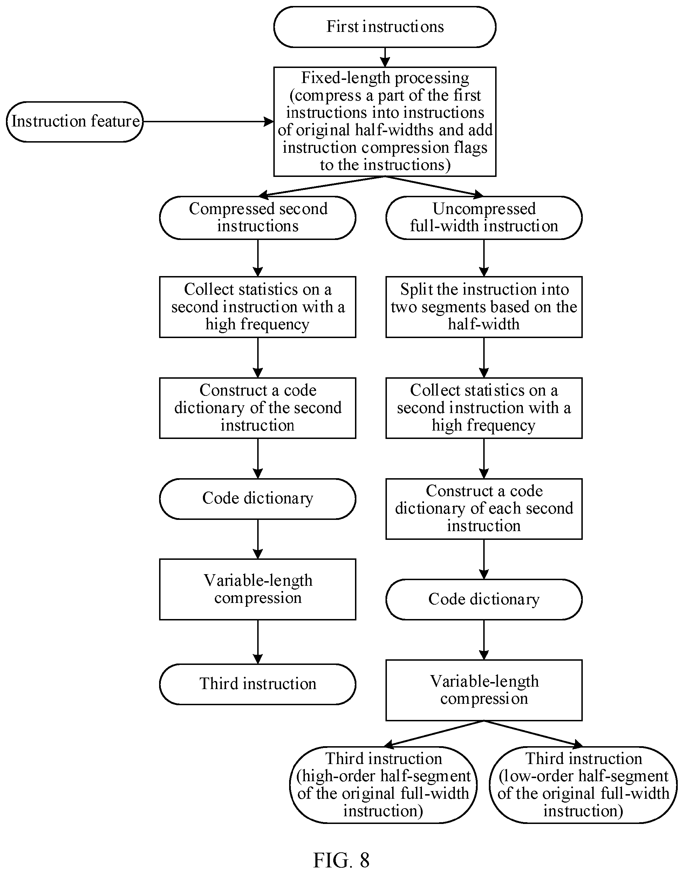

For example, the compression module may sequentially perform the variable-length compression on each second instruction based on an instruction location of each second instruction, may perform the variable-length compression on each second instruction randomly, or may perform the variable-length compression on each second instruction in descending order or ascending order based on an occurrence frequency of each second instruction. Refer to FIG. 8. When the fixed-length processing is performed on a plurality of first instructions based on the instruction feature, the fixed-length compression is performed on a part of the first instructions. The part of the first instructions are compressed into instructions of original half-widths, and instruction compression flags are added to the instructions, to obtain second instructions. An uncompressed full-width instruction, namely, the first instruction, is split into two segments based on the half-width, to obtain two second instructions. For the second instructions obtained through processing, the compression module collects statistics on a second instruction with a high frequency, where the high frequency indicates that an occurrence frequency is higher than a frequency threshold, and the compression module preferentially performs the variable-length compression on the second instruction with the high frequency.

Optionally, a variable-length compression process includes but is not limited to: obtaining an occurrence frequency of each field included in the second instruction; and obtaining the third instruction based on the occurrence frequency of each field, where the third instruction includes a code of each field, the code of each field is determined based on the occurrence frequency of each field, and a length of the code of each field is in inverse proportion to the occurrence frequency of each field.

For example, an occurrence frequency of a field may be an occurrence frequency of the field in a full instruction, the full instruction refers to all instructions to be stored in the memory structure, and the full instruction includes the second instruction. In a possible case, different instructions include same fields, and the same fields may be fields whose values are completely the same, or may be fields with same functions or fields with similar functions. For any field included in the second instruction, the compression module collects statistics on a first quantity of the fields and a second quantity of fields included in the full instruction, and divides the first quantity by the second quantity, to obtain a quotient, where the quotient is an occurrence frequency of the any field.

After determining the occurrence frequency of each field, the compression module may perform encoding based on the occurrence frequency of each field. In a possible case, the compression module may construct, based on the occurrence frequency of each field, a code dictionary corresponding to the second instruction, where the code dictionary includes each field and the occurrence frequency of each field; and determine the code of each field based on the code dictionary. The compression module may use the occurrence frequency of each field as an index of the field, and store the field and the index together in the code dictionary. Alternatively, the compression module may determine a storage location of each field in a compression dictionary based on the occurrence frequency of each field. For example, the compression dictionary is a multi-way tree, a field with the highest occurrence frequency is used as a root node, and then leaf nodes are constructed from bottom to top in descending order of the occurrence frequency of each field.

Regardless of a manner in which the compression module constructs the code dictionary, the compression module may perform the variable-length compression on the second instruction based on the constructed code dictionary, to obtain the third instruction, as shown in FIG. 8. Optionally, the compression module determines the occurrence frequency of each field based on the code dictionary, and determines the code corresponding to the field based on the occurrence frequency. A field with a higher occurrence frequency has a code of a shorter length. For example, the fields include a field A, a field B, and a field C. An occurrence frequency of the field A is higher than an occurrence frequency of the field B, and the occurrence frequency of the field B is higher than an occurrence frequency of the field C. In this case, a code of the field A is 0, a code of the field B is 1, and a code of the field C is 01. In a possible implementation, the variable-length compression may be referred to as Huffman (Huffman) compression.

The code corresponding to each field is determined based on the occurrence frequency. A quantity of fields with a higher occurrence frequency is larger in the full instruction. Therefore, codes of smaller lengths are used for the larger quantity of fields, and then the codes corresponding to the plurality of fields are concatenated into the third instruction. This effectively reduces an overall length of the full instruction. In addition, the second instruction may include one or more fields. This is not limited in this embodiment of this application. When the second instruction includes one field, the foregoing process of performing encoding based on the occurrence frequency of the field may be understood as performing overall instruction encoding on the second instruction based on the occurrence frequency of the second instruction in the full instruction. In other words, one second instruction corresponds to one code, and the code is the third instruction.

In a possible implementation, the third instruction includes a code index, and the code index is used to search, in a process of decompressing the third instruction, for a field corresponding to a code included in the third instruction. When the compression dictionary is used for the encoding, the code index may be referred to as information for searching for an index of the dictionary. Still refer to FIG. 7. In FIG. 7, the code index is information carried in a tag (tag), and the tag may also be referred to as a fixed-length code compression header (code compress tag) in some cases.

In a possible case, after compressing the first instruction, the compression module may store the compressed first instruction in the memory structure, so that the compressed first instruction achieves a programmable effect. This facilitates subsequent parsing performed by the decoding module and calculation performed by a parallel computing module, to ensure smooth execution of an application program corresponding to the first instruction. For example, the compression module obtains an instruction length of the compressed first instruction, determines, based on the instruction length, a storage unit that is in the memory structure and that is configured to store the compressed first instruction, and stores the compressed first instruction in the determined storage unit.

Optionally, an example in which the compressed first instruction is the third instruction in the foregoing embodiment is still used. In addition to the code index, the third instruction further includes a length field of the third instruction. An encoding module may determine an instruction length of the third instruction by parsing the length field of the third instruction, and then store, based on a memory size of an idle unit in a storage unit in the storage module, the third instruction in a storage unit whose idle memory size is not less than the instruction length. In a possible case, when the third instruction is an instruction obtained by compressing the first instruction included in the instruction bundle, the compression module stores, in a same row of storage units, a plurality of third instructions that belong to a same instruction bundle. Optionally, the compression module may determine, based on a boundary bit of each third instruction, the plurality of third instructions that belong to the same instruction bundle, or may determine, based on an instruction bundle identifier carried in each third instruction, third instructions with same instruction bundle identifiers as the third instructions that belong to the same instruction bundle. Because subsequent parsing of instructions in the storage module is performed by row of storage units, the plurality of third instructions that belong to the same instruction bundle are stored in a same row, to ensure that the third instructions that belong to the same instruction bundle can be processed in parallel at a same moment. Still refer to FIG. 7. In FIG. 7, the compression module stores, in a same row of storage units, a plurality of third instructions obtained through variable-length compression. However, the uncompressed first instructions in FIG. 7 occupy two rows of storage units. By compressing the first instruction, storage space occupied by the first instruction is effectively reduced, and the storage overheads are further reduced.

In conclusion, according to the instruction processing method provided in this embodiment of this application, before the first instruction is stored, the first instruction is compressed, to reduce a size of the first instruction. A memory structure with a same capacity can store more compressed first instructions than uncompressed first instructions. This increases a quantity of instructions stored in the memory structure and reduces storage overheads of the memory structure. In addition, more instructions are stored in a same row of storage units. In a subsequent process of reading instructions by row, a quantity of instruction reading times is small, and reading overheads are low. Because the first instruction is compressed based on the compression hierarchy of the memory, and the compression hierarchy of the memory is determined based on the required speed for reading the first instruction from the memory structure, a process of restoring the compressed first instruction meets the required speed of the memory structure. Even if the compressed first instruction needs to be restored in a process of reading the compressed first instruction, normal running of the memory in the memory structure is not affected, and smooth running of the application program that is run according to the first instruction is also ensured.

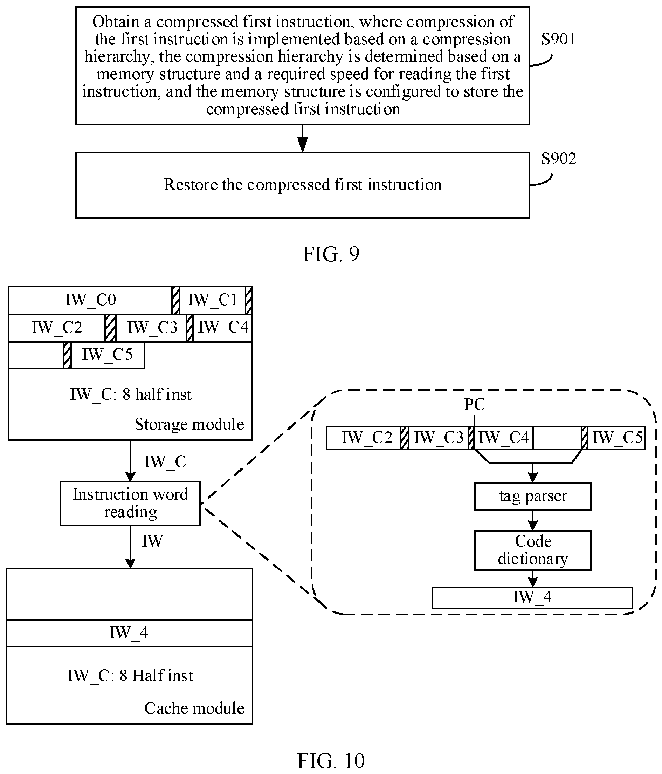

An embodiment of this application provides an instruction processing method. The instruction processing method may be applied to the implementation environment shown in FIG. 1 or FIG. 2. For example, the method is performed by a restoration module. A flowchart of the method is shown in FIG. 9, and includes S901 and S902.

S901: Obtain a compressed first instruction, where compression of a first instruction is implemented based on a compression hierarchy, the compression hierarchy is determined based on a memory structure and a required speed for reading the first instruction, and the memory structure is configured to store the compressed first instruction.

For example, the restoration module obtains a to-be-processed instruction identifier, and determines the to-be-processed compressed first instruction based on the instruction identifier. The restoration module may determine, based on a program loading status inside a device, an instruction identifier that is currently allowed to be calculated, or may receive an instruction identifier that is manually input. The instruction identifier may be an identifier of an instruction bundle to which the compressed first instruction belongs, or may be an identifier of a location of a storage unit in which the instruction is located, for example, a specific row of the storage unit. The instruction identifier may alternatively be another identifier that can distinguish between different instructions.

Regardless of a manner in which the restoration module obtains the to-be-processed instruction identifier and determines the to-be-processed compressed first instruction based on the instruction identifier, the restoration module may extract the compressed first instruction from the memory structure. In a possible implementation, the restoration module may extract at least one instruction stored in a row of storage units of a storage module; and separate each instruction based on an instruction length of each of the at least one instruction, to obtain the at least one instruction, where the at least one instruction includes the compressed first instruction.

For example, at least one instruction stored in a row of storage units is 0100001110101, where 0 is a compression flag bit, and a 1^{st} instruction starts with 1. Because an instruction length of the 1^{st} instruction is 3, the 1^{st} instruction is 100. 0 after 100 is a boundary bit. Therefore, it is determined that a compression flag bit of a 2^{nd} instruction is 0, and then the 2^{nd} instruction is determined based on an instruction length of the 2^{nd} instruction. In this way, separation of a plurality of instructions is implemented.

FIG. 10 is a diagram of an instruction processing process according to an embodiment of this application. Refer to FIG. 10. A plurality of compressed instructions are stored in the storage module by instruction word. In FIG. 10, one instruction word includes eight half-width instructions (half inst) because one row of storage units in a cache module can store only eight half-width instructions. In FIG. 10, lengths of instruction words corresponding to eight half-width instructions are different because lengths of instructions obtained by performing variable-length compression on half-width instructions included in different instruction words are different.

In FIG. 10, an example in which an instruction word IW_C4 is read is used for description. The restoration module locates the instruction word IW_C4 by using a program counter (program counter, PC), extracts the located instruction word IW_C4, and separates each instruction based on an instruction length of each instruction included in the instruction word IW_C4. As shown in FIG. 7, an instruction length of an instruction is information included in a tag of the instruction. The restoration module may determine an instruction length of each instruction by parsing the tag, to implement separation of a plurality of instructions. For example, a tag parser is used in FIG. 10. Because the separation of the plurality of instructions is sequentially performed, a tag parsing process may be referred to as serial parsing in some cases. After obtaining the plurality of instructions through separation, the restoration module may determine the to-be-processed compressed first instruction from the plurality of instructions. FIG. 10 is still used as an example. The first five instructions in the eight instructions obtained through separation in FIG. 10 are instructions included in an instruction bundle 1. Because an instruction identifier indicates that a currently to-be-processed instruction bundle is the instruction bundle 1, the restoration module determines that the first five instructions are to-be-processed compressed first instructions. Optionally, the first instruction includes an instruction for forwarding an application program.

In a possible implementation, the restoration module may alternatively receive the compressed first instruction sent by the memory structure, to obtain the to-be-restored compressed first instruction. The example in which the memory structure shown in FIG. 4 includes the storage module is still used. A processor core sends an instruction read request to the storage module. The storage module determines, based on the instruction read request, that a to-be-read instruction is the compressed first instruction, and reads the compressed first instruction. Because an instruction format that can be processed by the processor core is an uncompressed instruction format, before the instruction is returned to the processor core, the compressed first instruction needs to be restored to the uncompressed first instruction. Based on this, the storage module sends the extracted compressed first instruction to the restoration module, and the restoration module obtains the compressed first instruction.

S902: Restore the compressed first instruction.

For example, the restoration module obtains a compression manner corresponding to the compressed first instruction, and restores the compressed first instruction by using a restoration manner corresponding to the compression manner. The compression manner corresponding to the first instruction matches a compression hierarchy of a memory that stores the first instruction. The restoration module may determine, based on a communication connection to a compression module, the compression manner used by the compression module for the first instruction. When the compressed first instruction is obtained by compressing the first instruction by using a plurality of compression manners, the restoration module may determine, based on a read sequence of each memory, a restoration sequence corresponding to each memory, and sequentially restores, based on the restoration sequence, the compressed first instruction by using a restoration manner corresponding to the compression manner.

In the embodiment shown in FIG. 3, when the memory structure includes the storage module and the cache module, the compression hierarchy of the storage module is the two-layer compression, the compression hierarchy of the cache module is the single-layer compression, the restoration speed of the single-layer compression is higher than the restoration speed of the two-layer compression, and the compressed first instruction includes the third instruction, the process of restoring the compressed first instruction includes but is not limited to: restoring the third instruction by using the restoration manner corresponding to the compression manner of the two-layer compression, to obtain the second instruction; and restoring the second instruction by using the restoration manner corresponding to the compression manner of the single-layer compression, to obtain the first instruction, where the compression rate of the compression manner of the two-layer compression is greater than the compression rate of the compression manner of the single-layer compression.

For example, when the compression manner of the two-layer compression is the variable-length compression, a restoration manner 1 corresponding to the variable-length compression includes: The restoration module parses a code index included in the third instruction; and determines, based on the code index, each field corresponding to each code included in the third instruction, and determines the second instruction based on each field corresponding to each code, where a length of the code of each field is in inverse proportion to an occurrence frequency of each field.

In a possible implementation, the third instruction includes the code index. For example, the third instruction includes a tag field, and the restoration module parses the tag field to determine the code index carried in the tag field. Optionally, the code index may directly indicate a correspondence between the code and the field. When the compression module performs encoding based on a code dictionary, the code index may indicate a code dictionary used in a process of obtaining the third instruction through encoding, and the restoration module determines the correspondence between the code and the field based on the code dictionary.

In a possible case, there are different cases of the second instruction obtained by compressing the first instruction by the compression module, and the cases are respectively a case 1 of the second instruction obtained by performing fixed-length compression on the first instruction, a case 2 of most significant bits of the second instruction obtained by splitting the first instruction, and a case 3 of least significant bits of the second instruction obtained by splitting the first instruction. Code dictionaries used for encoding the different cases of the second instruction are stored in different locations. In this case, the restoration module first determines, based on a compression flag bit carried in the third instruction, a case of the second instruction corresponding to the third instruction, and sends the code index to a storage location of a code dictionary corresponding to the determined case, to obtain the code dictionary.

For example, the restoration module parses the compression flag bit, determines the storage location of the code dictionary of the third instruction based on the compression flag bit and information carried in the third instruction, accesses the determined storage location, and obtains the code dictionary of the third instruction based on the code index. When a value of the compression flag bit is a first value, it is determined that the second instruction corresponding to the third instruction is the case 1, and the code dictionary used to decompress the third instruction is determined, based on the code index of the third instruction, from a plurality of code dictionaries for fixed-length compression. When a value of the compression flag bit is a second value, it is determined, based on information carried in the second instruction, whether the second instruction corresponding to the third instruction belongs to the most significant bits or the least significant bits. When the second instruction corresponding to the third instruction belongs to the most significant bits, it is determined that the second instruction corresponding to the third instruction is the case 2, and the code dictionary used to decompress the third instruction is determined from a high-bit-width code dictionary based on the code index. When the second instruction corresponding to the third instruction belongs to the least significant bits, it is determined that the second instruction corresponding to the third instruction is the case 3, and the code dictionary used to decompress the third instruction is determined from a low-bit-width code dictionary based on the code index.

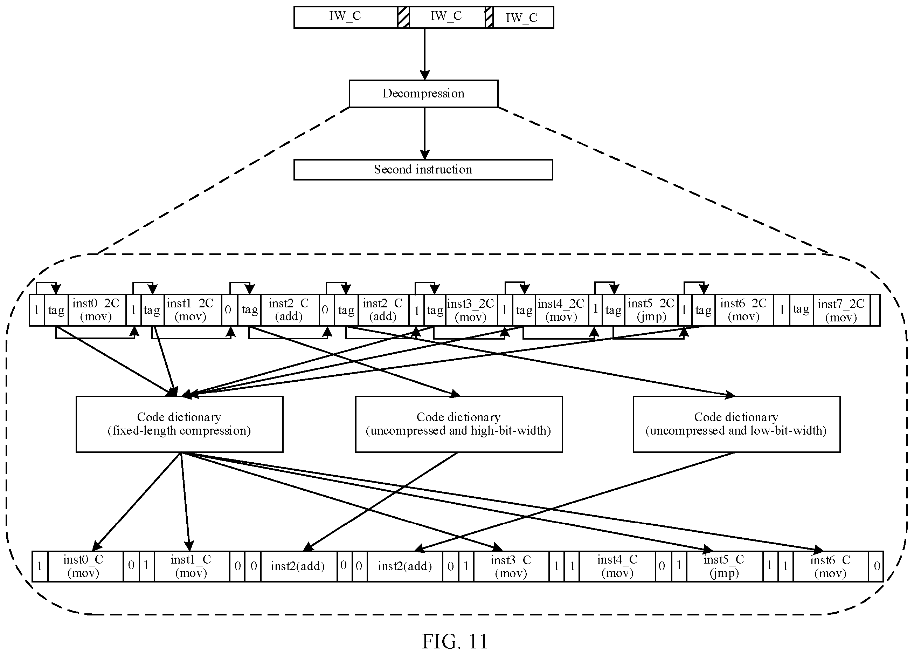

FIG. 11 shows a process of restoring a third instruction according to an embodiment of this application. FIG. 11 shows a process of decompressing a third instruction included in an instruction word to obtain a second instruction. The instruction word includes nine third instructions. The restoration module determines, based on a compression flag bit of each third instruction, fixed-length processing corresponding to each third instruction. When the fixed-length processing corresponding to the third instruction is fixed-length compression, the restoration module parses a code index carried in a tag, sends the code index to storage space used to store a code dictionary for fixed-length compression, and receives a returned code dictionary that is obtained through searching based on the code index and that is used to decompress the third instruction. When the fixed-length processing corresponding to the third instruction is splitting, for a third instruction obtained by compressing a high-bit-width second instruction, the restoration module sends a code index to storage space used to store a high-bit-width code dictionary, and receives a returned code dictionary that is obtained through searching based on the code index and that is used to decompress the third instruction; and for a third instruction obtained by compressing a low-bit-width second instruction, the restoration module sends a code index to storage space used to store a low-bit-width code dictionary, and receives a returned code dictionary that is obtained through searching based on the code index and that is used to decompress the third instruction.

Regardless of a manner in which the restoration module obtains the code dictionary used to decompress the third instruction, the restoration module may obtain a correspondence between a code and a field based on the code dictionary. For example, the code dictionary constructs a storage location of each field based on an occurrence frequency of each field. The restoration module determines the occurrence frequency of each field based on the storage location of each field in the code dictionary, and determines the correspondence between each field and the code based on a correspondence between the occurrence frequency of each field and the code. Then, the restoration module obtains, through searching based on the correspondence between the field and the code, the field corresponding to each code included in the third instruction, and concatenates each corresponding field to obtain the second instruction.

For example, after restoring the third instruction to obtain the second instruction, the restoration module may send the second instruction to the cache module for caching. Optionally, in a process of restoring the third instruction, the restoration module uses an instruction word as a dimension, and the instruction word refers to at least one instruction stored in a row of cache units of the cache module. Therefore, a plurality of restored second instructions may be stored in a same row of the cache module. For example, as shown in FIG. 10, the instruction word IW_4 that is obtained through decompression and that includes a plurality of second instructions is stored in a row of the cache module.

After restoring the third instruction to obtain the second instruction, the restoration module may further restore the second instruction. For example, the restoration module extracts the second instruction from the cache module, and restores the second instruction by using a restoration manner corresponding to a compression manner of single-layer compression. For example, when the compression manner of the single-layer compression is the fixed-length processing, a restoration manner 2 corresponding to the fixed-length processing includes: determining, from the fixed-length compression or the splitting, a manner used to obtain the second instruction; and performing, on the second instruction, a restoration operation corresponding to the determined manner.

In a possible implementation, when the second instruction includes a compression flag bit, and the compression flag bit indicates that the second instruction is obtained by using a fixed-length compression manner or a splitting manner, the restoration module may parse the compression flag bit included in the second instruction, determine, based on the compression flag bit, from the fixed-length compression and the splitting, a manner of obtaining the second instruction, and select a restoration operation used to restore the second instruction.

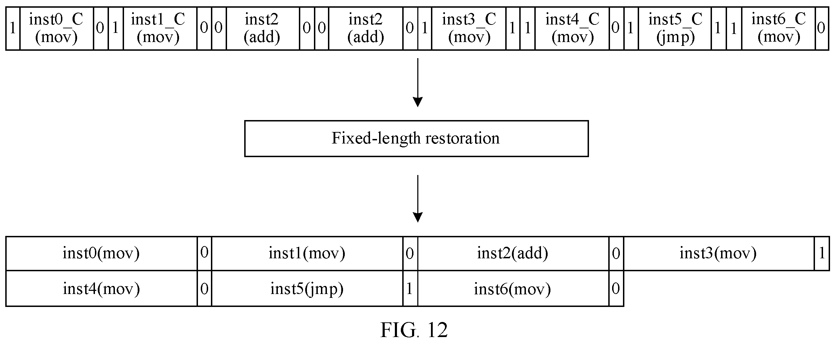

For example, the restoration module reads the compression flag bit, and determines, when the compression flag bit is a first value, that the manner of obtaining the second instruction is the fixed-length compression, or determines, when the compression flag bit is a second value, that the manner of obtaining the second instruction is the splitting. FIG. 12 is a diagram of restoring a second instruction according to an embodiment of this application. In FIG. 12, one instruction word includes eight second instructions. The restoration module parses a compression flag bit before inst0_C. Because a value of the compression flag bit is a first value 1, it is determined that fixed-length processing corresponding to the second instruction is fixed-length compression. The restoration module parses a compression flag bit before inst2, where a value of the compression flag bit is a second value 0; and determines that fixed-length processing corresponding to the second instruction is splitting.

After determining the fixed-length processing corresponding to the second instruction, the restoration module may perform fixed-length restoration corresponding to the fixed-length processing. In a possible case, a restoration manner corresponding to a compression manner of single-layer compression includes decompression corresponding to the fixed-length compression or concatenation corresponding to the splitting, and performing a restoration manner 2 on the second instruction includes but is not limited to the following two restoration operations.

Restoration operation 1: Perform, when the second instruction is obtained by using a fixed-length compression manner, the decompression corresponding to the fixed-length compression on the second instruction, to obtain the first instruction. For the second instruction obtained through fixed-length compression, the decompression corresponding to the fixed-length compression may be performed on the second instruction. The second instruction shown in FIG. 6 is still used as an example. The restoration module determines an instruction structure corresponding to the second instruction, restores an invalid field corresponding to the second instruction based on the instruction structure, and concatenates the invalid field and a valid field included in the second instruction, to obtain the first instruction. The restoration module may determine the instruction structure based on an instruction type of the second instruction. For example, based on the second instruction being a mov instruction, the restoration module determines that a non-blank field of the second instruction further includes an ineffective cond field. The restoration module determines, based on the valid field carried in the second instruction, information carried in the ineffective cond field, and concatenates the ineffective cond field, another blank field, and the valid field, to obtain the first instruction shown in FIG. 6.

Restoration operation 2: Concatenate, when the second instruction is obtained by using a splitting manner, a plurality of second instructions obtained by splitting the first instruction, to obtain the first instruction, where bit widths of the plurality of second instructions are the same. For the second instructions obtained through splitting, the restoration module determines a plurality of second instructions obtained by splitting a same first instruction, and concatenates the plurality of second instructions to obtain the first instruction. Optionally, the restoration module may determine, based on storage locations of the second instructions, a plurality of second instructions obtained by splitting a same first instruction. For example, a plurality of second instructions obtained by splitting a same first instruction are adjacently stored. The restoration module determines that second instructions that are adjacently stored and whose compression flag bits are all the second value are second instructions obtained by splitting a same first instruction. Alternatively, the restoration module may determine, based on information carried in the second instructions, the second instructions that belong to the same first instruction.

In a possible implementation, after obtaining the first instruction through restoration, the restoration module further sends the first instruction to a decoding module, and the decoding module parses the first instruction. Because the decoding module performs processing by instruction bundle in an instruction parsing process, a process in which the restoration module sends the first instruction includes but is not limited to: determining an instruction bundle corresponding to the first instruction, where the instruction bundle includes at least one instruction, a compression result of the at least one instruction is stored in a same row of storage units of the memory structure, a compression result of any instruction in the compression result of the at least one instruction is the compressed first instruction, and the at least one instruction is an instruction executed in parallel; and sending the at least one instruction included in the instruction bundle to the decoding module, where the decoding module is configured to parse the at least one instruction.

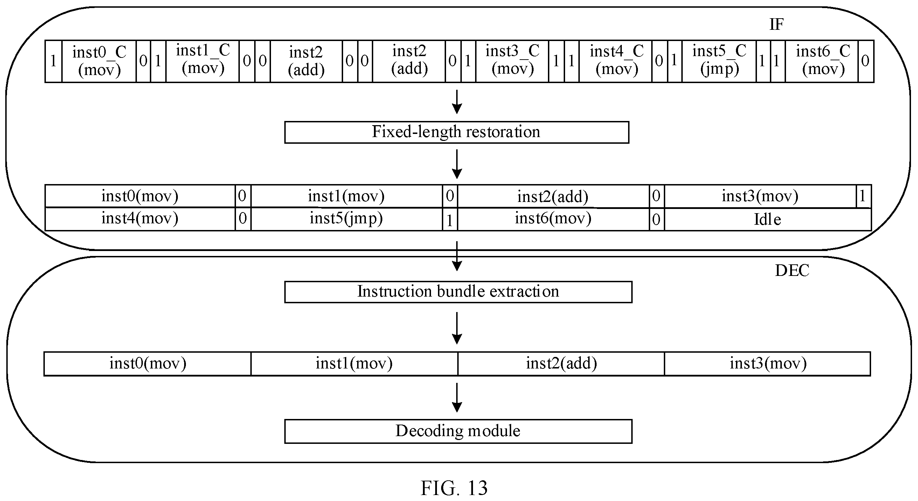

FIG. 13 is a diagram of an instruction processing process according to an embodiment of this application. In FIG. 13, after a plurality of first instructions are obtained by performing fixed-length restoration on a plurality of second instructions, a first instruction included in an instruction bundle is extracted from the plurality of first instructions. For example, based on a boundary bit included in a first instruction, when the boundary bit is 0, it is determined that the first instruction is not the last instruction included in the instruction bundle. Backward searching continues until a first instruction whose boundary bit is 1 is read, and it is determined that the first instruction and the previous first instruction are first instructions included in a same instruction bundle. In FIG. 13, four extracted first instructions included in the instruction bundle are respectively inst0, inst1, inst2, and inst3. The decoding module receives the plurality of first instructions included in the instruction bundle.

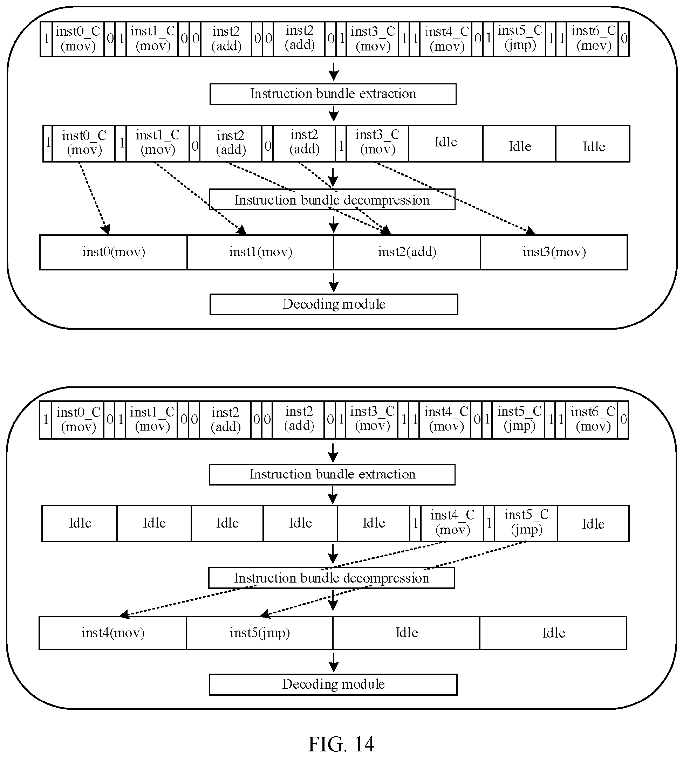

Optionally, as shown in FIG. 13, the restoration module may first perform fixed-length restoration on the second instructions, and then determine an instruction bundle to which a restored first instruction belongs; or may first determine instruction bundles to which the second instructions belong, and then perform fixed-length restoration on the second instructions included in the instruction bundles, to obtain a first instructions included in each instruction bundle. A plurality of second instructions shown in FIG. 14 are used as an example. The restoration module extracts, based on boundary bits of the plurality of second instructions, an instruction bundle 1 including inst0, inst1, inst2, and inst3, and an instruction bundle 2 including inst4 and inst5. In addition, the restoration module decompresses the instruction bundles, and performs fixed-length restoration on the second instructions included in the instruction bundles, to obtain the plurality of first instructions. The restoration module synchronously sends a plurality of first instructions included in one instruction bundle to the decoding module. In addition, a manner of determining an instruction included in an instruction bundle is not limited in this embodiment of this application. An instruction included in an instruction bundle may be determined based on a boundary bit according to the foregoing embodiment, or may be determined in another manner, for example, based on an instruction bundle identifier.

In conclusion, according to the instruction processing method provided in this embodiment of this application, storage space occupied by the compressed first instruction is smaller than storage space occupied by the first instruction, and a memory structure with a same memory size can store more compressed first instructions, so that a quantity of instructions stored in the memory structure is large. Because a quantity of instructions stored in a same row in the memory structure is larger, when the instructions stored in the memory structure are read by row, efficiency of reading the instructions is high, and power consumption of reading the instructions is reduced.

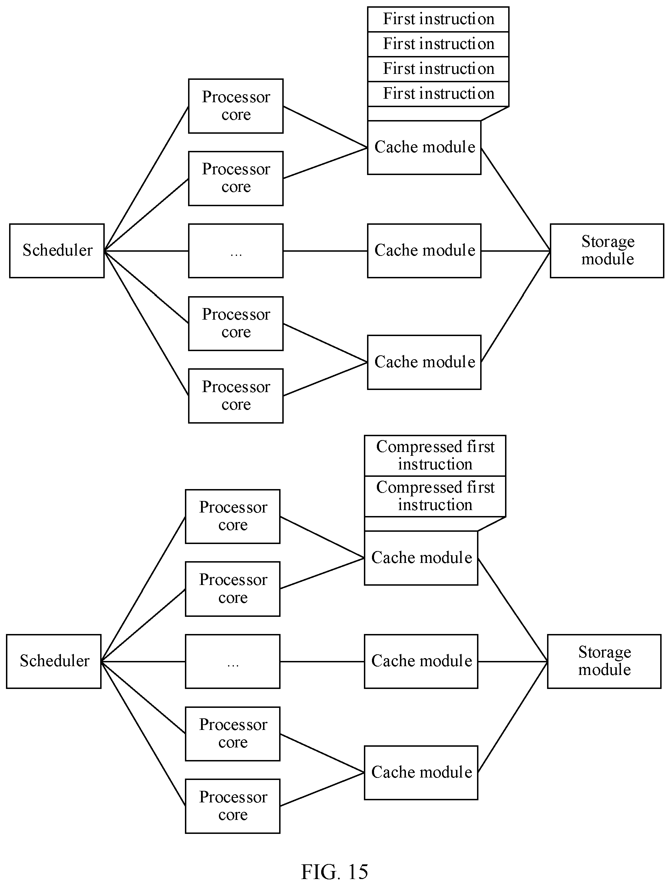

As shown in FIG. 15, a plurality of RTC cores in an RTC processor architecture share one cache module, and the RTC cores read an instruction stored in the cache module at a high speed. For example, the upper diagram in FIG. 15 shows a case in which an uncompressed first instruction is stored in the cache module, a plurality of first instructions occupy four rows of cache units, and the RTC core can extract the plurality of first instructions only by reading the first instructions for four times. The lower diagram in FIG. 15 shows a case in which a compressed first instruction is stored in the cache module, a plurality of compressed first instructions occupy two rows of cache units, and the RTC core may obtain the plurality of first instructions by reading the first instructions twice. A read speed of the RTC core is improved, and a probability that a conflict occurs when the RTC cores access the cache module at the same time is low. Therefore, more RTC cores may share the cache module, and more cache modules are saved. In addition, a restoration manner of restoring the compressed first instruction meets a processing requirement of a read module of each memory in the memory structure. Even if the compressed first instruction is decompressed, normal running of the read module is not affected. This ensures processing performance of the read module and normal running of a service corresponding to the first instruction.

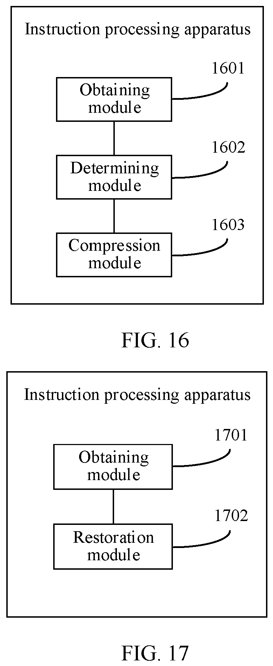

The instruction processing method in embodiments of this application is described above. Corresponding to the method, an embodiment of this application further provides an instruction processing apparatus. FIG. 16 is a diagram of a structure of an instruction processing apparatus according to an embodiment of this application. Based on the following plurality of modules shown in FIG. 16, the instruction processing apparatus shown in FIG. 16 can perform all or a part of the operations shown in FIG. 3. It should be understood that the apparatus may include more additional modules than the shown modules or a part of the shown modules may be omitted. This is not limited in this embodiment of this application. As shown in FIG. 16, the apparatus includes:
an obtaining module 1601, configured to obtain a to-be-processed first instruction;
a determining module 1602, configured to determine, based on a memory structure and a required speed for reading the first instruction, a compression hierarchy of a memory in the memory structure, where the memory structure is configured to store a compressed first instruction; and
a compression module 1603, configured to compress the first instruction by using the compression hierarchy.

In a possible implementation, the obtaining module 1601 is further configured to obtain at least one of a path attribute of a read path of each memory included in the memory structure or read efficiency of the memory structure, where the read path of the memory is a path connecting the memory and a read module, and the read module is configured to read an instruction stored in the memory and process the read instruction; and the determining module 1602 is further configured to determine, based on at least one of the path attribute or the read efficiency, the required speed for reading the first instruction.

In a possible implementation, the determining module 1602 is configured to: determine a read speed of each memory included in the memory structure; determine a restoration speed of each memory based on the required speed for reading the first instruction and the read speed of each memory, where the restoration speed of the memory is a speed of decompressing, on the read path of the memory, the instruction stored in the memory; and determine a compression hierarchy of each memory based on the restoration speed of each memory, where a compression speed corresponding to the compression hierarchy of the memory matches the restoration speed corresponding to the memory.

In a possible implementation, the memory structure includes a storage module and a cache module, a compression hierarchy of the storage module is two-layer compression, a compression hierarchy of the cache module is single-layer compression, and a restoration speed of the single-layer compression is higher than a restoration speed of the two-layer compression. The compression module 1603 is configured to: compress the first instruction by using a compression manner of the single-layer compression, to obtain a second instruction; and compress the second instruction by using a compression manner of the two-layer compression, to obtain a third instruction, where a compression rate of the compression manner of the two-layer compression is greater than a compression rate of the compression manner of the single-layer compression.

In a possible implementation, a ratio of a bit width of the first instruction to a bit width of the second instruction is equal to a compression ratio. The obtaining module 1601 is further configured to obtain a service feature of the first instruction, where the service feature indicates a running quality requirement of a service that is run according to the first instruction. The determining module 1602 is further configured to determine the compression ratio based on the service feature of the first instruction.

In a possible implementation, the compression module 1603 is configured to: obtain an instruction feature of the first instruction; and compress, when determining, based on the instruction feature, that fixed-length compression is supported, the first instruction by using a fixed-length compression manner, to obtain the second instruction; or split, when determining, based on the instruction feature, that the fixed-length compression is not supported, the first instruction into a plurality of second instructions, where bit widths of the plurality of second instructions are the same.

In a possible implementation, the instruction feature includes at least one of an instruction type, a usage frequency, or a field utilization rate of the first instruction.

In a possible implementation, the compression module 1603 is configured to determine a valid field of the first instruction, to obtain the second instruction including the valid field, where the valid field is a field used for running the first instruction.

In a possible implementation, the second instruction includes a compression flag bit, and the compression flag bit indicates that the second instruction is obtained by using the fixed-length compression manner or a splitting manner.

In a possible implementation, the compression module 1603 is configured to: obtain an occurrence frequency of each field included in the second instruction; and obtain the third instruction based on the occurrence frequency of each field, where the third instruction includes a code of each field, the code of each field is determined based on the occurrence frequency of each field, and a length of the code of each field is in inverse proportion to the occurrence frequency of each field.

In a possible implementation, the determining module 1602 is further configured to: construct, based on the occurrence frequency of each field, a code dictionary corresponding to the second instruction, where the code dictionary includes each field and the occurrence frequency of each field; and determine the code of each field based on the code dictionary.

In a possible implementation, the third instruction includes a code index, and the code index is used to search, in a process of decompressing the third instruction, for a field corresponding to a code included in the third instruction.

In a possible implementation, the apparatus further includes: a storage module, configured to: obtain an instruction length of the compressed first instruction; and determine, based on the instruction length, a storage unit that is in the memory structure and that is configured to store the compressed first instruction, and store the compressed first instruction in the determined storage unit.

In a possible implementation, the first instruction includes an instruction for forwarding an application program.

In a possible implementation, the obtaining module 1601 is configured to obtain at least one instruction included in an instruction bundle, where any one of the at least one instruction is the to-be-processed first instruction, and the at least one instruction is an instruction executed in parallel.

The foregoing apparatus compresses the first instruction, to reduce a size of storage space occupied by the first instruction. A memory structure with a same capacity can store more compressed first instructions than uncompressed first instructions. This increases a quantity of instructions stored in the memory structure, and reduces storage overheads of the memory structure. Because the first instruction is compressed based on the compression hierarchy of the memory, and the compression hierarchy is determined based on the required speed, a process of restoring the compressed first instruction meets the required speed of the memory structure, and the process of restoring the compressed first instruction does not affect normal running of the memory in the memory structure.

An embodiment of this application further provides another instruction processing apparatus. FIG. 17 is a diagram of a structure of an instruction processing apparatus according to an embodiment of this application. Based on the following plurality of modules shown in FIG. 17, the instruction processing apparatus shown in FIG. 17 can perform all or a part of the operations shown in FIG. 9. It should be understood that the apparatus may include more additional modules than the shown modules or a part of the shown modules may be omitted. This is not limited in this embodiment of this application. As shown in FIG. 17, the apparatus includes:
an obtaining module 1701, configured to obtain a compressed first instruction, where compression of a first instruction is implemented based on a compression hierarchy, the compression hierarchy is determined based on a memory structure and a required speed for reading the first instruction, and the memory structure is configured to store the compressed first instruction; and
a restoration module 1702, configured to restore the compressed first instruction.

In a possible implementation, the memory structure includes a storage module and a cache module, a compression hierarchy of the storage module is two-layer compression, a compression hierarchy of the cache module is single-layer compression, a restoration speed of the single-layer compression is higher than a restoration speed of the two-layer compression, and the compressed first instruction includes a third instruction. The restoration module 1702 is configured to: restore the third instruction by using a restoration manner corresponding to a compression manner of the two-layer compression, to obtain a second instruction; and restore the second instruction by using a restoration manner corresponding to a compression manner of the single-layer compression, to obtain the first instruction, where a compression rate of the compression manner of the two-layer compression is greater than a compression rate of the compression manner of the single-layer compression.

In a possible implementation, the third instruction includes a code index, and the restoration module 1702 is configured to: parse the code index included in the third instruction; and determine, based on the code index, each field corresponding to each code included in the third instruction, and determine the second instruction based on each field corresponding to each code, where a length of the code of each field is in inverse proportion to an occurrence frequency of each field.

In a possible implementation, the restoration manner corresponding to the compression manner of the single-layer compression includes decompression corresponding to fixed-length compression or concatenation corresponding to splitting. The restoration module 1702 is configured to: perform, when the second instruction is obtained by using a fixed-length compression manner, decompression corresponding to the fixed-length compression on the second instruction, to obtain the first instruction; or concatenate, when the second instruction is obtained by using a splitting manner, a plurality of second instructions obtained by splitting the first instruction, to obtain the first instruction, where bit widths of the plurality of second instructions are the same.

In a possible implementation, the second instruction includes a compression flag bit, and the compression flag bit indicates that the second instruction is obtained by using the fixed-length compression manner or a splitting manner. The restoration module 1702 is further configured to: parse the compression flag bit included in the second instruction, and determine, based on the compression flag bit, from the fixed-length compression and the splitting, a manner of obtaining the second instruction.

In a possible implementation, the obtaining module 1701 is configured to: extract at least one instruction stored in a row of storage units of the memory structure; and separate each instruction based on an instruction length of each of the at least one instruction, to obtain the at least one instruction, where the at least one instruction includes the compressed first instruction.

In a possible implementation, the apparatus further includes: a sending module, configured to: determine an instruction bundle corresponding to the first instruction, where the instruction bundle includes at least one instruction, a compression result of the at least one instruction is stored in a same row of storage units of the memory structure, a compression result of any instruction in the compression result of the at least one instruction is the compressed first instruction, and the at least one instruction is an instruction executed in parallel; and send the at least one instruction included in the instruction bundle to a decoding module, where the decoding module is configured to parse the at least one instruction.

In a possible implementation, the first instruction includes an instruction for forwarding an application program.

Storage space occupied by the compressed first instruction is smaller than storage space occupied by the first instruction, and a memory structure with a same memory size can store more compressed first instructions, so that a quantity of instructions stored in the memory structure is increased. The compressed first instruction may be restored, so that normal implementation of a subsequent related operation according to the first instruction is ensured.

It should be understood that, when the apparatus provided in FIG. 16 or FIG. 17 implements a function of the apparatus, division of the foregoing functional modules is used as an example for description. In actual application, the foregoing functions may be allocated to different functional modules as required. In other words, the internal structure of the device is divided into different functional modules, to implement all or a part of the functions described above. In addition, the apparatuses provided in the foregoing embodiments and the method embodiments belong to the same concept. For details of a specific implementation process, refer to the method embodiments. Details are not described herein again. In addition, the instruction processing apparatus provided in FIG. 16 or FIG. 17 may be a chip or a communication device. For example, the instruction processing apparatus may be the following network device.

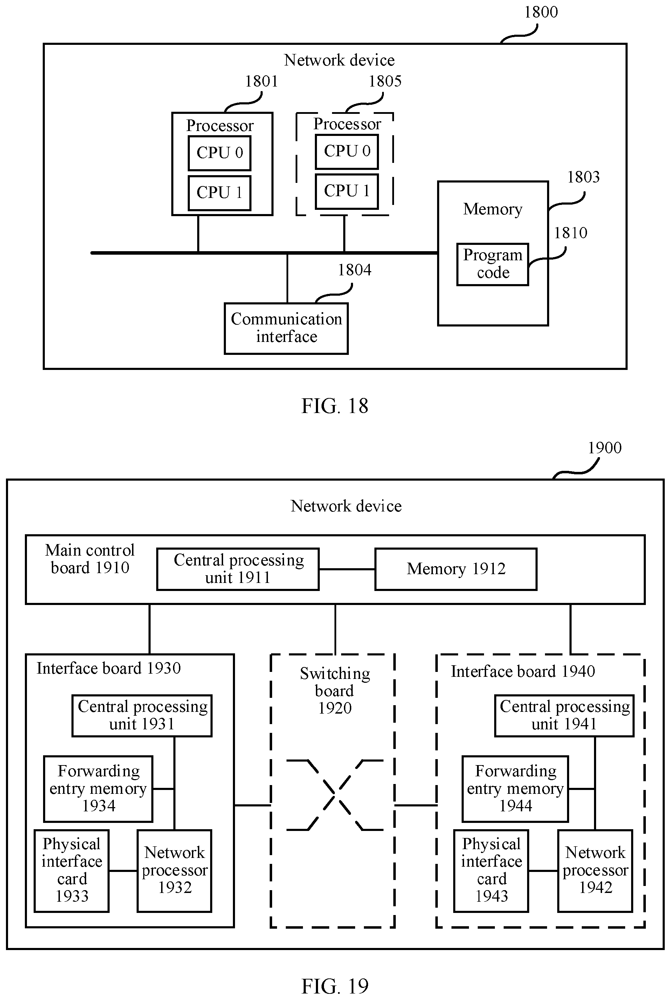

FIG. 18 is a diagram of a structure of a network device 1800 according to an example embodiment of this application. The network device 1800 shown in FIG. 18 is configured to perform an operation related to the instruction processing method shown in FIG. 3 or FIG. 9. The network device 1800 is, for example, a switch or a router, and the network device 1800 may be implemented by using a general bus architecture.

As shown in FIG. 18, the network device 1800 includes at least one processor 1801, a memory 1803, and at least one communication interface 1804.

The processor 1801 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 1801 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor can implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the network device 1800 further includes a bus. The bus is configured to transmit information between components of the network device 1800. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one bold line is used to represent the bus in FIG. 18, but this does not mean that there is only one bus or only one type of bus.

The memory 1803 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 1803 exists independently, and is connected to the processor 1801 through the bus. Alternatively, the memory 1803 may be integrated with the processor 1801.

The communication interface 1804 uses any apparatus like a transceiver, and is configured to communicate with another device or a communication network. The communication network may be an Ethernet, a radio access network (RAN), a wireless local area network (wireless local area network, WLAN), or the like. The communication interface 1804 may include a wired communication interface, and may further include a wireless communication interface. Specifically, the communication interface 1804 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 1804 may be used by the network device 1800 to communicate with another device.

During specific implementation, in an embodiment, the processor 1801 may include one or more CPUs such as a CPU 0 and a CPU 1 shown in FIG. 18. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 1800 may include a plurality of processors, for example, the processor 1801 and a processor 1805 shown in FIG. 18. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 1800 may further include an output device and an input device. The output device communicates with the processor 1501, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1801, and may receive an input from a user in a plurality of manners. For example, the input device may be a mouse, a keyboard, a touchscreen device, a sensor device, or the like.

In some embodiments, the memory 1803 is configured to store program code 1810 for executing the solutions of this application, and the processor 1801 may execute the program code 1810 stored in the memory 1803. In other words, the network device 1800 may implement, by using the processor 1801 and the program code 1810 in the memory 1803, the instruction processing method provided in the method embodiment. The program code 1810 may include one or more software modules. Optionally, the processor 1801 may also store program code or instructions for executing the solutions of this application.

In a specific embodiment, the network device 1800 in this embodiment of this application may correspond to a computing device in the foregoing method embodiments.

The steps of the instruction processing method shown in FIG. 3 or FIG. 9 are completed by using an integrated logic circuit of hardware in the processor of the network device 1800 or instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

FIG. 19 is a diagram of a structure of a network device 1900 according to another example embodiment of this application. The network device 1900 shown in FIG. 19 is configured to perform all or a part of the operations related to the instruction processing method shown in FIG. 3 or FIG. 9. The network device 1900 is, for example, a switch or a router, and the network device 1900 may be implemented by using a general bus architecture.

As shown in FIG. 19, the network device 1900 includes a main control board 1910 and an interface board 1930.

The main control board is also referred to as a main processing unit (main processing unit, MPU) or a route processor card (route processor card). The main control board 1910 is configured to control and manage components in the network device 1900, and includes functions of route calculation, device management, device maintenance, and protocol processing. The main control board 1910 includes a central processing unit 1911 and a memory 1912.

The interface board 1930 is also referred to as a line interface unit (line processing unit, LPU), a line card (line card), or a service board. The interface board 1930 is configured to provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Client, FlexE Client). The interface board 1930 includes a central processing unit 1931, a network processor 1932, a forwarding entry memory 1934, and a physical interface card (physical interface card, PIC) 1933.

The central processing unit 1931 on the interface board 1930 is configured to: control and manage the interface board 1930, and communicate with the central processing unit 1911 on the main control board 1910.

The network processor 1932 is configured to implement packet forwarding. A form of the network processor 1932 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 1932 is configured to forward a received packet according to a forwarding table stored in the forwarding entry memory 1934. If a destination address of the packet is an address of the network device 1900, the packet is sent to a CPU (for example, the central processing unit 1631) for processing. If a destination address of the packet is not an address of the network device 1900, the forwarding table is searched, based on the destination address, for a next hop and an outbound interface that correspond to the destination address, and the packet is forwarded to the outbound interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is needed in the interface board.

The physical interface card 1933 is configured to implement an interconnection function at a physical layer. Original traffic enters the interface board 1930 from the physical interface card, and a processed packet is sent from the physical interface card 1933. The physical interface card 1933, also referred to as a subcard, may be installed on the interface board 1930, and is responsible for converting an optical/electrical signal into a packet, performing validity check on the packet, and forwarding the packet to the network processor 1932 for processing. In some embodiments, the central processing unit 1931 may also perform a function of the network processor 1932, for example, implement software forwarding based on a general-purpose CPU, so that the network processor 1932 is not needed in the physical interface card 1933.

Optionally, the network device 1900 includes a plurality of interface boards. For example, the network device 1900 further includes an interface board 1940. The interface board 1940 includes a central processing unit 1941, a network processor 1942, a forwarding entry memory 1944, and a physical interface card 1943. Functions and implementations of components on the interface board 1940 are the same as or similar to those of the interface board 1930. Details are not described herein again.

Optionally, the network device 1900 further includes a switching board 1920. The switching board 1920 may also be referred to as a switch fabric unit (switch fabric unit, SFU). When the network device 1900 has a plurality of interface boards, the switching board 1920 is configured to perform data exchange between the interface boards. For example, the interface board 1930 and the interface board 1940 may communicate with each other via the switching board 1920.

The main control board 1910 is coupled to the interface board. For example, the main control board 1910, the interface boards 1930 and 1940, and the switching board 1920 are connected to a system backboard through a system bus to implement interworking. In a possible implementation, an inter-process communication (inter-process communication, IPC) protocol channel is established between the main control board 1910 and the interface board 1930, and between the main control board 1910 and the interface board 1940, and communication between the main control board 1910 and the interface board 1930 and between the main control board 1910 and the interface board 1940 is performed through the IPC channel.

Logically, the network device 1900 includes a control plane and a forwarding plane. The control plane includes the main control board 1910 and the central processing unit 1911. The forwarding plane includes various components that perform forwarding, for example, the forwarding entry memory 1934, the physical interface card 1933, and the network processor 1932. The control plane performs functions such as a function of a router, a function of generating a forwarding table, a function of processing signaling and protocol packets, and a function of configuring and maintaining a status of the network device. The control plane delivers the generated forwarding table to the forwarding plane. On the forwarding plane, the network processor 1932 searches, according to the forwarding table delivered by the control plane, a table for forwarding the packet received by the physical interface card 1933. The forwarding table delivered by the control plane may be stored in the forwarding entry memory 1934. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form (for example, a network device like a low-end switch or router) has a low data exchange and processing capability. A specific architecture that is to be used depends on a specific networking deployment scenario. This is not limited herein.

In a specific embodiment, the network device 1900 corresponds to the instruction processing apparatus shown in FIG. 16 or FIG. 17. In some embodiments, the compression module 1602 in the instruction processing apparatus shown in FIG. 16 is equivalent to the central processing unit 1911 or the network processor 1932 in the network device 1900.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the instruction processing method.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both the volatile memory and the non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example but not limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides an instruction processing device. The device includes a processor, and the processor is configured to load and run at least one instruction, so that the instruction processing device implements the instruction processing method shown in FIG. 3 or FIG. 9. Optionally, the device further includes a memory, the memory is coupled to the processor, and the memory is configured to store at least one instruction.

An embodiment of this application further provides a computer-readable storage medium. The storage medium stores at least one instruction, and the instruction is loaded and executed by a processor, to enable a computer to implement the instruction processing method shown in FIG. 3 or FIG. 9.

An embodiment of this application further provides a computer program (product). When the computer program is executed by a computer, a processor or the computer may be enabled to perform corresponding steps and/or procedures in the foregoing method embodiments.

An embodiment of this application further provides a chip. The chip includes a processor, configured to invoke, from a memory, instructions stored in the memory and run the instructions, to enable a communication device in which the chip is installed to perform the instruction processing method shown in FIG. 3 or FIG. 9.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the instruction processing method shown in FIG. 3 or FIG. 9.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, the first instruction and the like in this application are all obtained in a case of full authorization.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or a part of the steps of embodiments may be implemented by hardware or a program instructing related hardware. The program may be stored in a computer-readable storage medium. The mentioned storage medium may be a read-only memory, a magnetic disk, an optical disc, or the like.

When software is used to implement the embodiments, all or a part of the embodiments may be implemented in a form of a computer program product. The computer program product includes one or more computer program instructions. In an example, the method in embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions used for the program module may be executed locally or in a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable instruction processing apparatus, so that when the program code is executed by the computer or the another programmable instruction processing apparatus, functions/operations specified in the flowcharts and/or block diagrams are implemented. The program code may be executed entirely on a computer, partially on a computer, as a standalone software package, partially on a computer and partially on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, for example, a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for detailed working processes of the foregoing described system, device, and module, refer to corresponding processes in the foregoing method embodiments. Details are not described herein again.

In the several embodiments provided in this application, it should be understood that the disclosed system, device, and method may be implemented in other manners. For example, the described device embodiment is merely an example. For example, division of the modules is merely division of logical functions and there may be other division modes during actual application. For example, a plurality of modules or components may be combined or may be integrated to another system, or some features may be ignored or not executed. In addition, the displayed or discussed mutual couplings or direct couplings or communication connections may be indirect couplings or communication connections implemented by some interfaces, devices, or modules, or may be electrical, mechanical, or other forms of connections.

Modules described as separate components may or may not be physically separate, and components displayed as modules may or may not be physical modules, to be specific, may be located at one position, or may be distributed on a plurality of network modules. A part or all of the modules may be selected based on an actual need to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Terms such as "first" and "second" in this application are used to distinguish between same or similar items with basically same roles and functions. It should be understood that there is no logical or timing dependency between "first", "second", and "nth", and neither a quantity nor an execution sequence is limited. It should be further understood that although the following descriptions use the terms such as "first" and "second" to describe various elements, these elements should not be limited by the terms. These terms are simply used to distinguish one element from another. For example, without departing from the scope of the various examples, a first image may be referred to as a second image, and similarly, the second image may be referred to as the first image. Both the first image and the second image may be images, and in some cases, may be separate and different images.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second packets means two or more second packets. The terms "system" and "network" in this specification are often used interchangeably.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or combinations thereof not excluded.

It should be further understood that the term "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that a specific feature, structure, or characteristic related to the embodiment or the implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

## Claims

1. An instruction processing method, wherein the method comprises:
obtaining a to-be-processed first instruction;
determining, based on a memory structure and a required speed for reading the first instruction, a compression hierarchy of a memory in the memory structure, wherein the memory structure is configured to store a compressed first instruction; and
compressing the first instruction by using the compression hierarchy.

2. The method according to claim 1, wherein before the determining, based on the memory structure and the required speed for reading the first instruction, the compression hierarchy of the memory in the memory structure, the method further comprises:
obtaining at least one of a path attribute of a read path of each memory comprised in the memory structure or read efficiency of the memory structure, wherein the read path of the memory is a path connecting the memory and a read module, and the read module is configured to read an instruction stored in the memory and process the read instruction; and
determining, based on at least one of the path attribute or the read efficiency, the required speed for reading the first instruction.

3. The method according to claim 1 or 2, wherein the determining, based on the memory structure and the required speed for reading the first instruction, the compression hierarchy of the memory in the memory structure comprises:
determining a read speed of each memory comprised in the memory structure;
determining a restoration speed of each memory based on the required speed for reading the first instruction and the read speed of each memory, wherein the restoration speed of the memory is a speed of decompressing, on the read path of the memory, the instruction stored in the memory; and
determining a compression hierarchy of each memory based on the restoration speed of each memory, wherein a compression speed corresponding to the compression hierarchy of the memory matches the restoration speed corresponding to the memory.

4. The method according to any one of claims 1 to 3, wherein the memory structure comprises a storage module and a cache module, a compression hierarchy of the storage module is two-layer compression, a compression hierarchy of the cache module is single-layer compression, and a restoration speed of the single-layer compression is higher than a restoration speed of the two-layer compression; and
the compressing the first instruction by using the compression hierarchy comprises:
compressing the first instruction by using a compression manner of the single-layer compression, to obtain a second instruction; and
compressing the second instruction by using a compression manner of the two-layer compression, to obtain a third instruction, wherein a compression rate of the compression manner of the two-layer compression is greater than a compression rate of the compression manner of the single-layer compression.

5. The method according to claim 4, wherein a ratio of a bit width of the first instruction to a bit width of the second instruction is equal to a compression ratio, and before the compressing the first instruction by using the compression manner of the single-layer compression, to obtain the second instruction, the method further comprises:
obtaining a service feature of the first instruction, wherein the service feature indicates a running quality requirement of a service that is run according to the first instruction; and
determining the compression ratio based on the service feature of the first instruction.

6. The method according to claim 4 or 5, wherein the compressing the first instruction by using the compression manner of the single-layer compression, to obtain the second instruction comprises:
obtaining an instruction feature of the first instruction; and
compressing, when determining, based on the instruction feature, that fixed-length compression is supported, the first instruction by using a fixed-length compression manner, to obtain the second instruction; or splitting, when determining, based on the instruction feature, that the fixed-length compression is not supported, the first instruction into a plurality of second instructions, wherein bit widths of the plurality of second instructions are the same.

7. The method according to claim 6, wherein the instruction feature comprises at least one of an instruction type, a usage frequency, or a field utilization rate of the first instruction.

8. The method according to claim 6 or 7, wherein the compressing the first instruction by using the fixed-length compression manner, to obtain the second instruction comprises:
determining a valid field of the first instruction, to obtain the second instruction comprising the valid field, wherein the valid field is a field used for running the first instruction.

9. The method according to any one of claims 4 to 8, wherein the second instruction comprises a compression flag bit, and the compression flag bit indicates that the second instruction is obtained by using the fixed-length compression manner or a splitting manner.

10. The method according to any one of claims 4 to 9, wherein the compressing the second instruction by using the compression manner of the two-layer compression, to obtain the third instruction comprises:
obtaining an occurrence frequency of each field comprised in the second instruction; and
obtaining the third instruction based on the occurrence frequency of each field, wherein the third instruction comprises a code of each field, the code of each field is determined based on the occurrence frequency of each field, and a length of the code of each field is in inverse proportion to the occurrence frequency of each field.

11. The method according to claim 10, wherein before the obtaining the third instruction based on the occurrence frequency of each field, the method further comprises:
constructing, based on the occurrence frequency of each field, a code dictionary corresponding to the second instruction, wherein the code dictionary comprises each field and the occurrence frequency of each field; and
determining the code of each field based on the code dictionary.

12. The method according to claim 10 or 11, wherein the third instruction comprises a code index, and the code index is used to search, in a process of decompressing the third instruction, for a field corresponding to a code comprised in the third instruction.

13. The method according to any one of claims 1 to 12, wherein after the compressing the first instruction by using the compression hierarchy, the method further comprises:
obtaining an instruction length of the compressed first instruction; and
determining, based on the instruction length, a storage unit that is in the memory structure and that is configured to store the compressed first instruction, and storing the compressed first instruction in the determined storage unit.

14. The method according to any one of claims 1 to 13, wherein the first instruction comprises an instruction for forwarding an application program.

15. The method according to any one of claims 1 to 14, wherein the obtaining the to-be-processed first instruction comprises:
obtaining at least one instruction comprised in an instruction bundle, wherein any one of the at least one instruction is the to-be-processed first instruction, and the at least one instruction is an instruction executed in parallel.

16. An instruction processing method, wherein the method comprises:
obtaining a compressed first instruction, wherein compression of the first instruction is implemented based on a compression hierarchy, the compression hierarchy is determined based on a memory structure and a required speed for reading the first instruction, and the memory structure is configured to store the compressed first instruction; and
restoring the compressed first instruction.

17. The method according to claim 16, wherein the memory structure comprises a storage module and a cache module, a compression hierarchy of the storage module is two-layer compression, a compression hierarchy of the cache module is single-layer compression, a restoration speed of the single-layer compression is higher than a restoration speed of the two-layer compression, and the compressed first instruction comprises a third instruction; and
the restoring the compressed first instruction comprises:
restoring the third instruction by using a restoration manner corresponding to a compression manner of the two-layer compression, to obtain a second instruction; and
restoring the second instruction by using a restoration manner corresponding to a compression manner of the single-layer compression, to obtain the first instruction, wherein a compression rate of the compression manner of the two-layer compression is greater than a compression rate of the compression manner of the single-layer compression.

18. The method according to claim 17, wherein the third instruction comprises a code index, and the restoring the third instruction by using the restoration manner corresponding to the compression manner of the two-layer compression, to obtain the second instruction comprises:
parsing the code index comprised in the third instruction; and
determining, based on the code index, each field corresponding to each code comprised in the third instruction, and determining the second instruction based on each field corresponding to each code, wherein a length of the code of each field is in inverse proportion to an occurrence frequency of each field.

19. The method according to claim 17 or 18, wherein the restoration manner corresponding to the compression manner of the single-layer compression comprises decompression corresponding to fixed-length compression or concatenation corresponding to splitting, and the restoring the second instruction by using the restoration manner corresponding to the compression manner of the single-layer compression, to obtain the first instruction comprises:
performing, when the second instruction is obtained by using a fixed-length compression manner, decompression corresponding to the fixed-length compression on the second instruction, to obtain the first instruction; or
concatenating, when the second instruction is obtained by using a splitting manner, a plurality of second instructions obtained by splitting the first instruction, to obtain the first instruction, wherein bit widths of the plurality of second instructions are the same.

20. The method according to claim 19, wherein the second instruction comprises a compression flag bit, the compression flag bit indicates that the second instruction is obtained by using the fixed-length compression manner or the splitting manner, and before the restoring the second instruction by using the restoration manner corresponding to the compression manner of the single-layer compression, to obtain the first instruction, the method further comprises:
parsing the compression flag bit comprised in the second instruction, and determining, based on the compression flag bit, from the fixed-length compression and the splitting, a manner of obtaining the second instruction.

21. The method according to any one of claims 16 to 20, wherein the obtaining the compressed first instruction comprises:
extracting at least one instruction stored in a row of storage units of the memory structure; and
separating each instruction based on an instruction length of each of the at least one instruction, to obtain the at least one instruction, wherein the at least one instruction comprises the compressed first instruction.

22. The method according to any one of claims 16 to 21, wherein after the restoring the compressed first instruction, the method further comprises:
determining an instruction bundle corresponding to the first instruction, wherein the instruction bundle comprises at least one instruction, a compression result of the at least one instruction is stored in a same row of storage units of the memory structure, a compression result of any instruction in the compression result of the at least one instruction is the compressed first instruction, and the at least one instruction is an instruction executed in parallel; and
sending the at least one instruction comprised in the instruction bundle to a decoding module, wherein the decoding module is configured to parse the at least one instruction.

23. The method according to any one of claims 16 to 22, wherein the first instruction comprises an instruction for forwarding an application program.

24. An instruction processing apparatus, wherein the apparatus comprises:
an obtaining module, configured to obtain a to-be-processed first instruction;
a determining module, configured to determine, based on a memory structure and a required speed for reading the first instruction, a compression hierarchy of a memory in the memory structure, wherein the memory structure is configured to store a compressed first instruction; and
a compression module, configured to compress the first instruction by using the compression hierarchy.

25. An instruction processing apparatus, wherein the apparatus comprises:
an obtaining module, configured to obtain a compressed first instruction, wherein compression of the first instruction is implemented based on a compression hierarchy, the compression hierarchy is determined based on a memory structure and a required speed for reading the first instruction, and the memory structure is configured to store the compressed first instruction; and
a restoration module, configured to restore the compressed first instruction.

26. An instruction processing device, wherein the device comprises a processor, and the processor is configured to load and execute at least one instruction, to enable the instruction processing device to implement the instruction processing method according to any one of claims 1 to 15 or implement the instruction processing method according to any one of claims 16 to 23.

27. A computer-readable storage medium, wherein the computer-readable storage medium stores at least one instruction, and the instruction is loaded and executed by a processor to implement the instruction processing method according to any one of claims 1 to 15 or implement the instruction processing method according to any one of claims 16 to 23.

28. A chip, wherein the chip comprises a processor, and the processor is configured to run program instructions or code, to enable a device comprising the chip to perform the instruction processing method according to any one of claims 1 to 15 or perform the instruction processing method according to any one of claims 16 to 23.

29. A computer program product, wherein the computer program product comprises a computer program/instructions, and the computer program/instructions are executed by a processor, to enable a computer to perform the instruction processing method according to any one of claims 1 to 15 or perform the instruction processing method according to any one of claims 16 to 23.
